# EUROPEAN PATENT SPECIFICATION

(11) **EP 4 167 422 B1**
(45) Date of publication and mention of the grant of the patent: **21.10.2026**
(21) Application number: 21826158.4
(22) Date of filing: 08.03.2021
(51) Int. Cl.: H02J 3/001, H02J 3/38, H02S 50/10

(54) **CONTROL METHOD FOR PHOTOVOLTAIC RAPID SWITCHING-OFF SYSTEM, AND APPLICATION APPARATUS AND SYSTEM THEREFOR**
STEUERUNGSVERFAHREN FÜR EIN FOTOVOLTAISCHES SCHNELLABSCHALTSYSTEM SOWIE ANWENDUNGSVORRICHTUNG UND SYSTEM DAFÜR
PROCÉDÉ DE COMMANDE DE SYSTÈME DE MISE HORS TENSION RAPIDE PHOTOVOLTAÏQUE, ET APPAREIL D'APPLICATION ET SYSTÈME ASSOCIÉS

(30) Priority: 15.06.2020 CN 202010542614
(43) Date of publication of application: 19.04.2023
(73) Proprietor: Sungrow Power Supply Co., Ltd., Hefei, Anhui 230088 (CN)
(72) Inventor: YANG, Yu, Hefei, Anhui 230088 (CN); YU, Yanfei, Hefei, Anhui 230088 (CN); XU, Jun, Hefei, Anhui 230088 (CN); CHEN, Qiaodi, Hefei, Anhui 230088 (CN)
(74) Representative: Zacco Norway AS
(86) International application number: PCT/CN2021/079463
(87) International publication number: WO 2021/253876

(56) References cited:
- CN-A- 108 418 543
- CN-A- 109 038 669
- CN-A- 109 245 713
- CN-A- 109 787 290
- CN-A- 110 854 919
- CN-A- 111 585 308
- CN-U- 209 217 733
- US-B1- 9 654 028
- US-B2- 9 960 732

## Description

This application claims the priority to Chinese Patent Application No. 202010542614.8 titled "METHOD FOR CONTROLLING PHOTOVOLTAIC RAPID SHUTDOWN SYSTEM, AND APPARATUS AND SYSTEM APPLYING THE SAME", filed on June 15, 2020 with the China National Intellectual Property Administration.

### FIELD

The present disclosure relates to the technical field of photovoltaic grid-connected power generation, and in particular to a method for controlling a photovoltaic rapid shutdown system, and a system applying the method.

### BACKGROUND

Photovoltaic power is renewable energy, and hence photovoltaic power generation technology is widely applied. A direct current is outputted from a photovoltaic array and then converted into an alternating current power by an inverter, and the alternating current power is transmitted to a power grid. A high voltage is outputted by serial-connected photovoltaic arrays. Hence, in order to ensure its safety, a photovoltaic system should be capable of being rapidly shut down when there is a safety fault, and recover outputting power after the fault is eliminated. That is, after the fault is eliminated, all shutdown devices for photovoltaic modules in the photovoltaic system should be turned on again, such that the photovoltaic module connected thereto can output power. As an example, patent document with publication no. CN109245713A discloses a serial module-level photovoltaic shutdown system, in which a shutdown controller generates a high-frequency oscillating current to control each shutdown device connected in series with a respective photovoltaic module. As another example, patent documents with publication no. US9960732B2, no. CN110854919A, and no. CN209217733U disclose a shutdown device connected in parallel with output terminals of a respective photovoltaic module. As another example, patent document with publication no. CN108418543A discloses a MPPT device connected in parallel with output terminals of a respective photovoltaic module.

In conventional technology, it is necessary to provide a central controller which transmit a continuous heartbeat communication signal, or provide a shutdown control module which is connected on a direct-current bus and transmit periodic excitation pulses, in order to activate the shutdown device. In the above two solutions, required are not only a transmission module in the photovoltaic inverting system, but also an additional receiving module in the shutdown device. Hence, a cost is increased for rapid shutdown of the photovoltaic system.

### SUMMARY

In view of the above, the invention provides a method for controlling a photovoltaic rapid shutdown system, and a photovoltaic rapid shutdown system, according to independent claims 1 and 8. Advantageous embodiments are described in the dependent claims. Thereby, a receiving module is saved in a shutdown device when implementing startup and rapid shutdown of a photovoltaic system, reducing a hardware cost of a photovoltaic rapid shutdown system.

The method for controlling the photovoltaic rapid shutdown system is provided according to embodiments of the present disclosure. The inverting system in the photovoltaic rapid shutdown system determines whether the photovoltaic rapid shutdown system is to enter the safe mode. The inverting system introduces the voltage fluctuations and/or the current fluctuations onto the direct-current bus in the photovoltaic rapid shutdown system in the case that the photovoltaic rapid shutdown system is not to enter the safe mode, and otherwise does not introduce the voltage fluctuations and/or the current fluctuations onto the direct-current bus. The shutdown device for the photovoltaic module in the photovoltaic rapid shutdown system determines according to the output parameter thereof whether the voltage and/or the current on the direct-current bus connected thereto meets the preset condition. The shutdown device controls itself to be turned on or maintains itself being on in the case that the voltage and/or the current on the direct-current bus connected thereto meets the preset condition, and otherwise controls itself to be turned off or maintains itself being off. Therefore, the shutdown device is always turned on or off based on the voltage fluctuations and/or the current fluctuations on the direct-current bus. That is, the shutdown device is capable to implement the on/off communication with the inverting system only via an inherent sampling device in the shutdown device. It is not necessary to provide an additional receiving device in the shutdown device and a transmitting device in the inverting system, which reduces a hardware cost of the photovoltaic rapid shutdown system.

### BRIEF DESCRIPTION OF THE DRAWINGS

Figure 1 is a schematic diagram of a method for controlling a photovoltaic rapid shutdown system according to an embodiment of the present disclosure.
Figure 2 is a schematic diagram of a method for controlling a photovoltaic rapid shutdown system according to another embodiment of the present disclosure.
Figure 3 is a schematic graph of current fluctuations according to an embodiment of the present disclosure.
Figure 4 is a schematic graph of current fluctuations according to another embodiment of the present disclosure.
Figure 5 is schematic graphs of a voltage on a direct-current bus and an output voltage of a shutdown device according to an embodiment of the present disclosure.
Figure 6 is a schematic diagram of a shutdown device for a photovoltaic module according to an embodiment of the present disclosure.
Figure 7 is a schematic diagram of an inverting system in a photovoltaic rapid shutdown system according to an embodiment of the present disclosure.
Figure 8 is a schematic diagram of an inverting system in a photovoltaic rapid shutdown system according to another embodiment of the present disclosure.
Figure 9 is a schematic diagram of an inverting system in a photovoltaic rapid shutdown system according to another embodiment of the present disclosure.
Figure 10 is a schematic diagram of a photovoltaic rapid shutdown system according to an embodiment of the present disclosure.
Figure 11 is a schematic diagram of a photovoltaic rapid shutdown system according to another embodiment of the present disclosure.
Figure 12 is a schematic diagram of a photovoltaic rapid shutdown system according to another embodiment of the present disclosure.
Figure 13 is a schematic diagram of a starting voltage module in an inverting system according to an embodiment of the present disclosure.
Figure 14 is a schematic diagram of a photovoltaic rapid shutdown system according to another embodiment of the present disclosure.
Figure 15 is a schematic diagram of a photovoltaic rapid shutdown system according to another embodiment of the present disclosure.

### DETAILED DESCRIPTION

Hereinafter technical solutions in embodiments of the present disclosure are described clearly and completely in conjunction with the drawings in embodiments of the present closure. Apparently, the described embodiments are only some rather than all of the embodiments of the present disclosure. Any other embodiments obtained based on the embodiments of the present disclosure by those skilled in the art without any creative effort fall within the scope of protection of the present disclosure.

The terms such as "include", "comprise" or any other variants thereof means to be non-exclusive. Therefore, a process, a method, an article or a device including a series of elements include not only the disclosed elements but also other elements that are not clearly enumerated, or further include inherent elements of the process, the method, the article or the device. Unless expressively limited, the statement "including a..." does not exclude the case that other similar elements may exist in the process, the method, the article or the device other than enumerated elements.

A method for controlling a photovoltaic rapid shutdown system is provided according to an embodiment of the present disclosure. Addressed is an issue that an additional receiving module should be provided in a shutdown device for a photovoltaic module, which increases a hardware cost of the shutdown device in conventional technology.

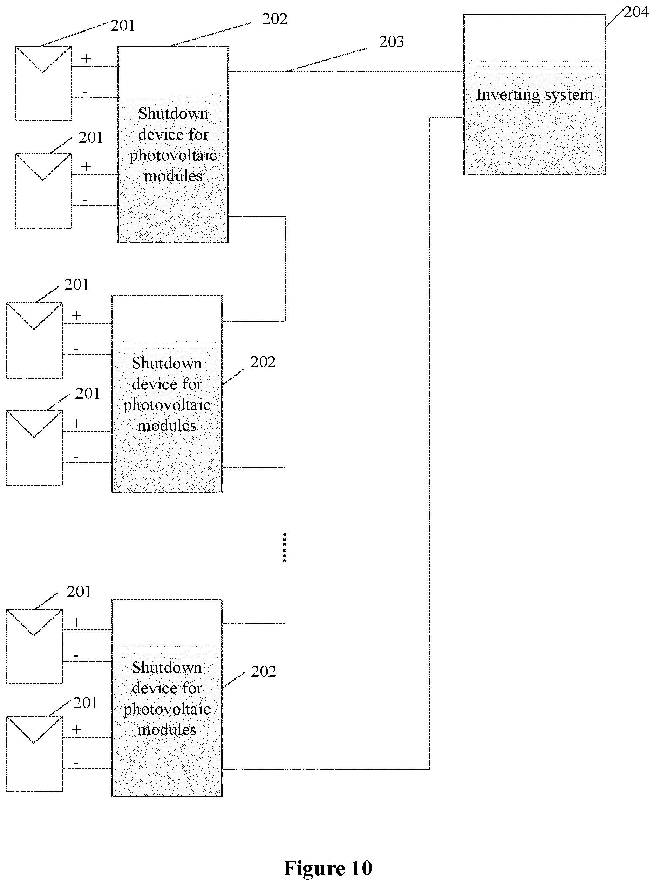

As shown in Figure 10, the photovoltaic rapid shutdown system includes at least one shutdown system and at least one inverting system 204. The shutdown system includes a direct-current bus 203, at least N photovoltaic modules 201, and N shutdown devices 202 for the photovoltaic modules. N is a positive integer.

In the shutdown system, the N shutdown devices 202 are cascaded via output terminals thereof, and are correspondingly connected to output terminals of the photovoltaic modules 201 via input terminals of the N shutdown devices 202. A positive terminal of the cascaded shutdown devices 202 is connected to a positive terminal of a direct-current interface of the inverting system 204 via a positive line of the direct-current bus 203. A negative terminal of the cascaded shutdown devices 202 is connected to a negative terminal of the direct-current interface of the inverting system 204 via a negative line of the direct-current bus 203.

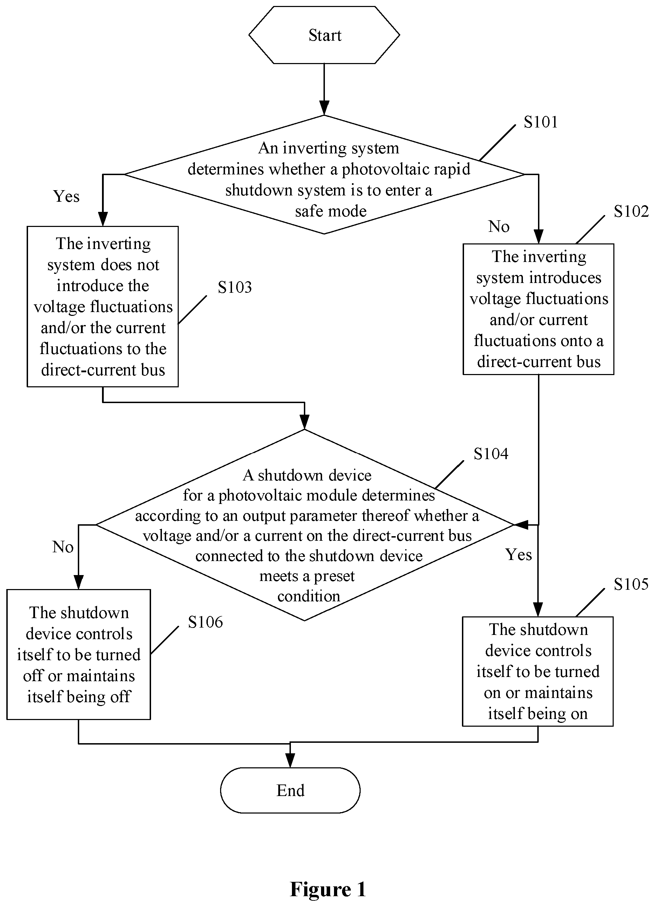

Reference is made to Figure 1, which is a method for controlling a photovoltaic rapid shutdown system. The method includes following steps S101 to S106.

In step S101, an inverting system determines whether the photovoltaic rapid shutdown system is to enter a safe mode.

In practice, the safe mode refers to that each shutdown device limits power outputted by a corresponding photovoltaic module, such that a voltage on the direct-current bus is less than a preset voltage within a first preset period. That is, the voltage on the direct-current bus is maintained low. The first preset period is not limited herein and may depend on an actual situation, and all implementations fall within the protection scope of the present disclosure. Moreover, whether the photovoltaic rapid shutdown system is to enter the safe mode may be determined according to an instruction issued by an upper computer, or according to a result of detecting the voltage. The means may be same as that in conventional technology art and is not limited herein.

The process goes to step S102 in a case that the photovoltaic rapid shutdown system is not to enter the safe mode, and goes to step S103 in a case that the photovoltaic rapid shutdown system,is to enter the safe mode.

In step S102, the inverting system introduces voltage fluctuations and/or current fluctuations onto the direct-current bus.

The voltage fluctuations and/or the current fluctuations are introduced onto the direct-current bus to break the stable direct-current state of a voltage and/or a current on the direct-current bus. The voltage fluctuations and/or the current fluctuations on the direct-current bus are transmitted to output terminals of the shutdown device for the photovoltaic module, so that the shutdown device is capable to determine whether it is permitted to be turned on.

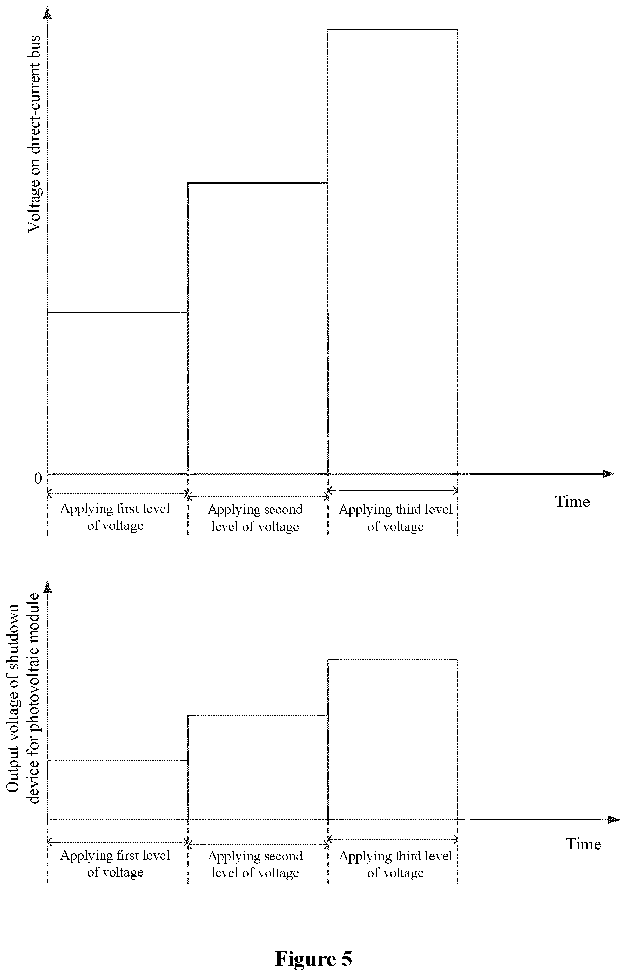

In a case that the voltage fluctuations are required to be introduced onto the direct-current bus, the inverting system controls a starting power module thereof to apply multiple levels of voltages separately on the direct-current bus, such that all shutdown devices connected to the direct-current bus are activated. Amplitude and duration of each level of the voltage are predetermined by the shutdown device and the inverting system, which are not limited herein. All implementations fall within the protection scope of the present disclosure. Reference is made to Figure 5, which shows a correspondence between the voltage on the direct-current bus and the output voltage of the shutdown device when the starting power module applies the multiple levels separately on the direct-current bus. The practical applications are limited thereto.

The shutdown device may perform erroneous shutdown when an interval between adjacent groups of fluctuations is long. In order to avoid such problem, in practice, the interval between adjacent groups of the voltage fluctuations and/or the current fluctuations, which are introduced by the inverting system onto the direct-current bus, is less than rapid shutdown duration of the photovoltaic rapid shutdown system, which is specified in a relevant standard. For example, the rapid shutdown duration is 30 seconds as specified in the standard NEC217. Therefore, the shutdown device can be maintained on without erroneous shutdown, as long as the inverting system continues introducing the voltage fluctuations and/or the current fluctuations onto the direct-current bus and the interval between adjacent groups of the fluctuations is less than the rapid shutdown duration. The rapid shutdown duration is not limited herein and may depend on an actual situation, and all implementations fall within the protection scope of the present disclosure.

In step S103, the inverting system,does not introduce the voltage fluctuations and/or the current fluctuations onto the direct-current bus.

In a case that the voltage fluctuations and/or the current fluctuations are not introduced onto the direct-current bus, a voltage and/or a current on the direct-current bus is in the constant direct-current state, and the voltage and/or the current transmitted from the direct-current bus to the output terminals of the shutdown device is also in the constant direct-current state.

The shutdown device may erroneously turn on itself when duration of no fluctuations being on the direct-current bus is short. In order to avoid such problem, in practice, duration of the inverting system not introducing the voltage fluctuations and/or the current fluctuations onto the direct-current bus is greater than or equal to the rapid shutdown duration of the photovoltaic rapid shutdown system, which is specified in a relevant standard. Therefore, the inverting system does not introduce the voltage fluctuations and/or the current fluctuations onto the direct-current bus for a period longer than or equal to the rapid shutdown duration, and correspondingly the shutdown device does not detect fluctuations for the period longer than or equal to the rapid shutdown duration. Hence, the shutdown device controls itself to be turned off.

In step S104, the shutdown device determines according to an output parameter of itself whether a voltage and/or a current on the direct-current bus connected to the shutdown device meets a preset condition.

The output parameter of the shutdown device changes due to the voltage and/or the current on the direct-current bus connected to the shutdown device being changed. That is, the output parameter of the shutdown device is positively proportional to the voltage and/or the current on the direct-current bus connected to the shutdown device. Therefore, when the inverting system controls the voltage on the direct-current bus to fluctuate, an output voltage of the shutdown device varies accordingly. When the inverting system controls the current on the direct-current bus to fluctuate, an output current of the shutdown device changes accordingly.

In practice, the preset condition includes there being a fluctuation greater than a corresponding threshold within a second preset period, and the second preset period is less than the rapid shutdown duration of the photovoltaic rapid shutdown system. That is, the shutdown device determines that the preset condition is met in a case that the shutdown device detects that there is a voltage fluctuation greater than a voltage threshold and/or a current fluctuation greater than a current threshold on the direct-current bus before the rapid shutdown duration expires, and determines that the preset condition is not met in a case that the shutdown device detects no voltage fluctuation greater than the voltage threshold and/or no current fluctuation greater than the current threshold for a period longer than the rapid shutdown duration. A specific process of the step S104 includes a following step. It is determined according to the output voltage of the shutdown device whether a deliberate voltage fluctuation is introduced onto the direct-current bus connected to the shutdown device, or it is determined according to the output current of the shutdown device whether a deliberate current fluctuation is introduced onto the direct-current bus connected to the shutdown device.

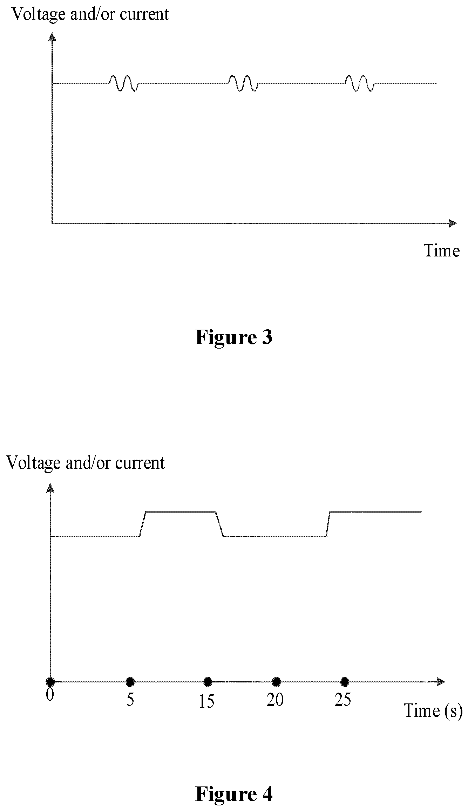

In practice, different means may be adopted in the step S104 to determine whether there is the fluctuation when the fluctuations introduced by the inverting system onto the direct-current bus in the step S102 are of different types.
(1) In the step S102, the inverting system introduces the voltage fluctuations and/or the current fluctuations, which have a frequency higher than a preset frequency, onto the direct-current bus. In practice, the preset frequency may be a first preset frequency which indicates that rapid voltage fluctuations and/or rapid current fluctuations, for example, the voltage fluctuations and/or the current fluctuations as shown in Figure 3, are currently introduced. In such case, the output parameter of the shutdown device includes the output voltage and/or the output current of the shutdown device, and the step S104 includes a following step. The shutdown device extracts an effective value of an alternating-current ripple from the output parameter within the second preset period, and determines whether the effective value is greater than or equal to a preset alternating-current ripple value. The shutdown device determines that the voltage and/or the current on the direct-current bus connected to the shutdown device meets the preset condition, in a case that the effective value is greater than or equal to the preset alternating-current ripple value. Otherwise, the shutdown device determines that the voltage and/or the current on the direct-current bus connected to the shutdown device does not meet the preset condition.
(2) In the step S102, the inverting system introduces the voltage fluctuations and/or the current fluctuations, which have a frequency lower than a preset frequency, onto the direct-current bus. In practice, the preset frequency herein may be a second preset frequency which is less than or equal to the first preset frequency, and which indicates that slow voltage fluctuations and/or slow current fluctuations, for example, the voltage fluctuations and/or the current fluctuations as shown in Figure 4, are currently introduced. In such case, the output parameter of the shutdown device includes the output voltage and/or the output current of the shutdown device, and the step S104 includes following steps. The shutdown device determines whether a difference an average of the output parameter within a period previous to a moment, which is in the second preset period and at which a fluctuation of the output parameter is detected, and an average of the output parameter within a period subsequent to the moment is greater than a corresponding preset current, where the output parameter is stable in the period previous to the moment and the period subsequent to the moment. The shutdown device determines that the voltage and/or the current on the direct-current bus connected to the shutdown device meets the preset condition, in a case that the difference is greater than the preset current. Otherwise, the shutdown device determines that the voltage and/or the current on the direct-current bus connected to the shutdown device does not meet the preset condition.
   It is taken as an example that the output parameter is the output current. As shown in Figure 4, the output current fluctuates at the moment of 5s, and it is determined whether a difference between an average current within a period from 0s to 5s and an average current for a period from 5s to 15s is greater than the preset current. It is determined that the current on the direct-current bus connected to the shutdown device meets the preset condition, in a case that the difference is greater than the preset current. Otherwise, it is determined that the current on the direct-current bus connected to the shutdown device does not meet the preset condition.
(3) In the step S102, the inverting system introduces the voltage fluctuations onto the direct-current bus. In such case, the output parameter of the shutdown device includes the output voltage, and the step S104 includes following steps. The shutdown device determines whether a difference between the voltage previous to a moment, which is in the second preset period and at which the fluctuation of the voltage is detected, and the voltage subsequent to the moment is greater than a preset voltage. The shutdown device determines that the voltage on the direct-current bus connected to the shutdown device meets the preset condition, in a case that the difference is greater than the preset voltage. Otherwise, the shutdown device determines that the voltage on the direct-current bus connected to the shutdown device does not meet the preset condition.

The inverting system may vary an alternating-current output power of itself abruptly during one or more cycles of the power grid, so as to introduce the rapid voltage fluctuations and/or the rapid current fluctuation onto the direct-current bus. Alternatively, the inverting system may vary a direct-current input current of itself to introduce the slow voltage fluctuations and/or the slow current fluctuations onto the direct-current bus. Alternatively, the inverting system may apply multiple levels of voltages separately on the direct-current bus via a starting voltage module therein. Alternatively, in a case that an inverter in the inverting system is difficult to modify due to hardware or software limitations and hence cannot introduce the voltage fluctuations and/or the current fluctuations, the aforementioned functions may be implemented by a direct-current voltage controller. Details of the direct-current voltage controller may refer to inverting system embodiments in following description.

The processes described in the above cases (1) and (2) are merely examples of the current fluctuations, and other cases of the current fluctuations are not enumerated herein. A specific form of the current fluctuations may depend on the actual situation, and all the implementations fall within the protection scope of the present disclosure. In addition, the inverting system may perform control on the direct-current bus through merely the current fluctuations or the voltage fluctuations, or through both the current fluctuations and the voltage fluctuations. Further details of the control process are not descripted herein, and all the implementations fall within the protection scope of the present disclosure.

The process goes to step S105 in a case that the voltage and/or the current on the direct-current bus connected to the shutdown device meets the preset condition, and goes to step S106 in a case that the voltage and/or the current on the direct-current bus connected to the shutdown device does not meet the preset condition.

In step S105, the shutdown device controls itself to be turned on, or maintains itself being on.

The shutdown device maintains itself being on in a case that the shutdown device is on currently. The shutdown device controls itself to be turned on in a case that the shutdown device is off currently. Thereby, the shutdown device is on after this step.

In step S106, the shutdown device controls itself to be turned off, or maintains itself being off.

The shutdown device controls itself to be turned off in a case that the shutdown device is on currently. The shutdown device maintains itself being off in a case that the shutdown device is off currently. Thereby, the shutdown device is off after this step.

In the foregoing process, the shutdown device is turned on or off based on the voltage fluctuations and/or the current fluctuations. That is, the shutdown device can implement on/off communication with the inverting system merely via a current/voltage sampling device in the shutdown device, and it is not necessary to provide an additional receiving device in the shutdown device. Hence, a hardware cost of the shutdown device is reduced, and thereby a hardware cost of the photovoltaic rapid shutdown system is reduced. Accordingly, only a module for controlling the voltage fluctuations and/or the current fluctuations is required in the inverting system, and it is not necessary to provide a signal transmitting module in the inverting system. Hence, a hardware cost of the photovoltaic rapid shutdown system is reduced. In addition, the voltage/current characteristics utilized herein has a low power level, and hence is more reliable and stable. Avoided is a problem that communications such as power line carrier communication and wireless communication are susceptible to interferences, and hence the stability of photovoltaic rapid shutdown system is improved.

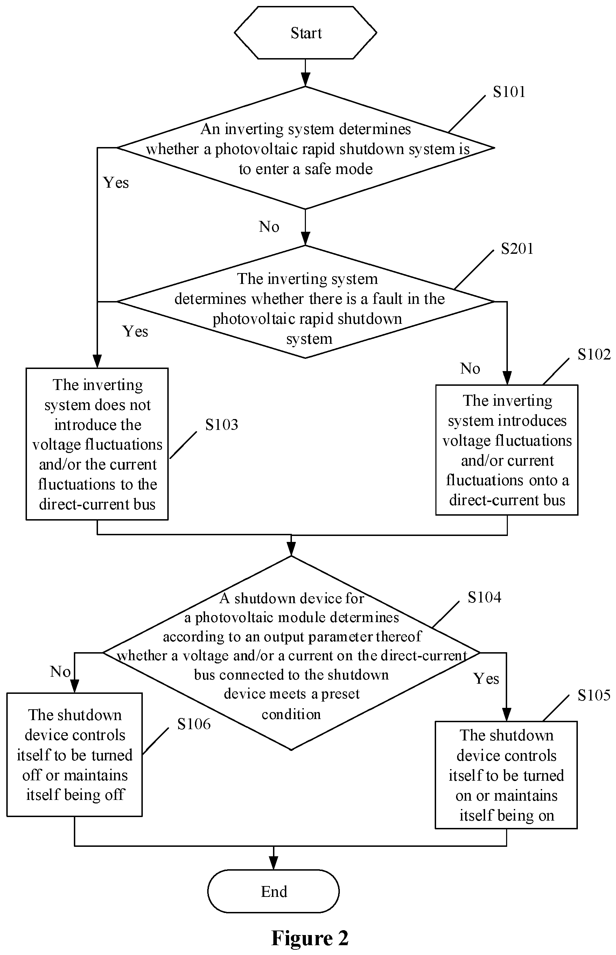

In addition, reference is made to Figure 2, in which the method further includes step S201 before the step S102.

In step S201, the inverting system determines whether there is a fault in the photovoltaic rapid shutdown system.

The fault includes at least one of: a fault of a grid voltage, a fault of a grid frequency, a fault of grounding impedance, a fault of a direct-current arc flash, manual activation of a rapid shutdown control switch, or a fault of manual shutdown.

The process goes to step S102 in a case that there is no fault in the photovoltaic rapid shutdown system, for example, when the fault has disappeared. The process goes to step S103 in a case that there is the fault in the photovoltaic rapid shutdown system.

In this embodiment, the inverting system determines whether there is the fault, before introducing the voltage fluctuations and/or the current fluctuations to control the photovoltaic module device to be turned on. Avoided is a problem that devices in the inverting system are damaged due to the photovoltaic module shutdown device being turned on and the corresponding photovoltaic module outputting power when there is the fault in the photovoltaic rapid shutdown system. Hence, safety of the photovoltaic rapid shutdown system is improved.

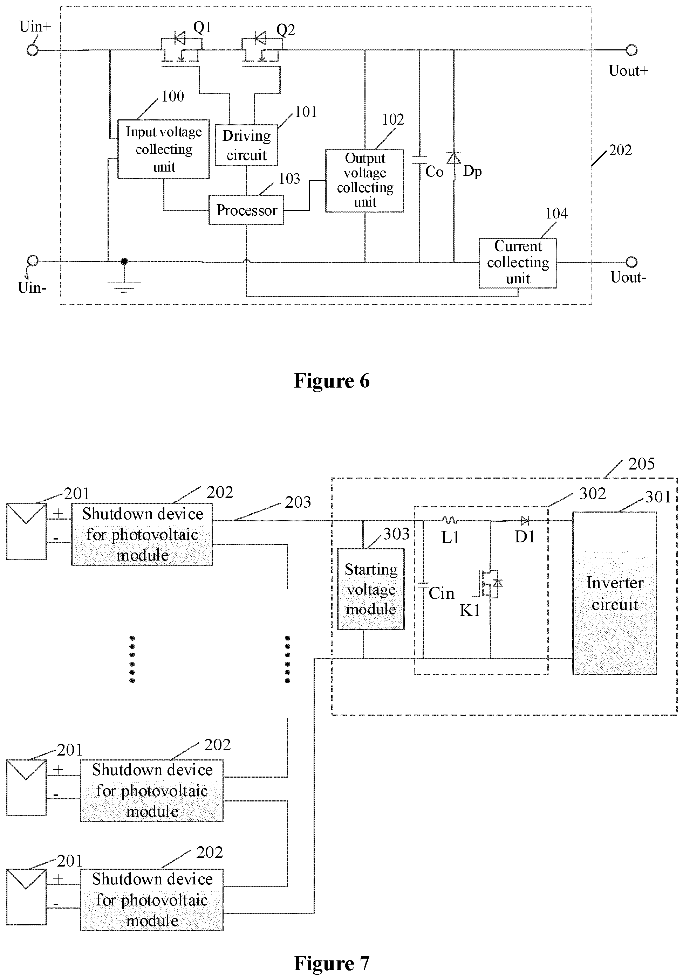

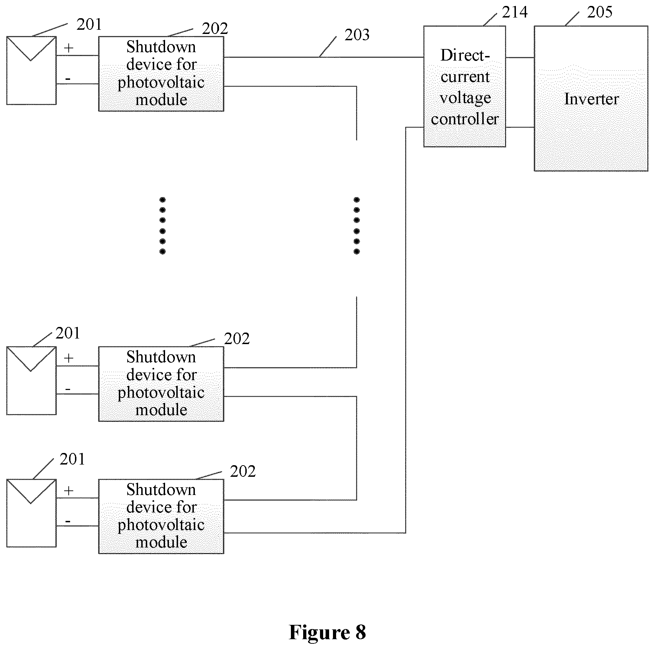

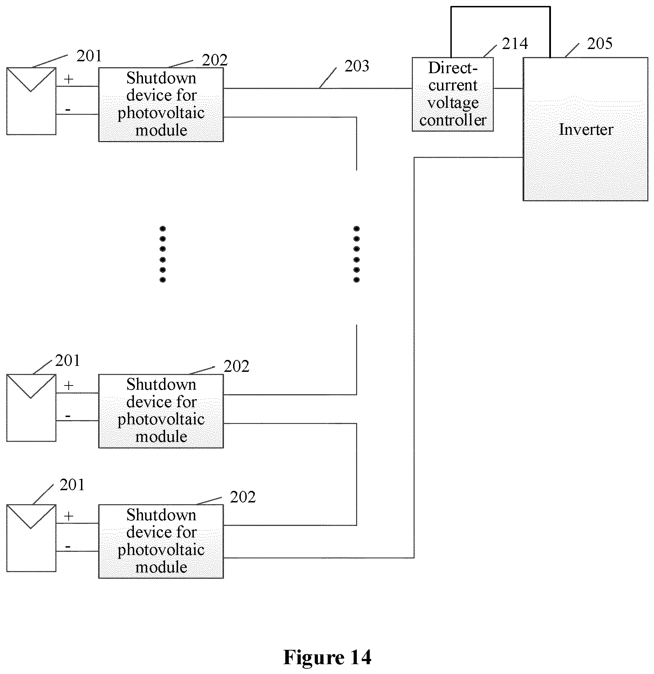

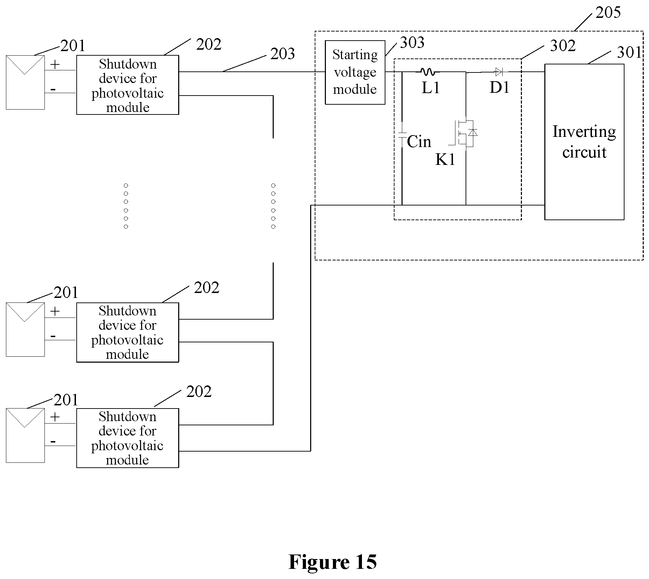

An inverting system is provided according to an embodiment of the present disclosure. As shown in Figure 7, the inverting system includes direct-current voltage-control circuitry (e.g., a starting voltage module 303 as shown in Figures 7 and 15, or a direct-current voltage controller 214 as shown in Figures 8 and 14) and an inverter 205.

An output terminal of the direct-current voltage-control circuitry is connected to a positive line of a direct-current bus (as shown in Figures 14 and 15). Alternatively, output terminals of the direct-current voltage-control circuitry are connected to the positive line and a negative line, respectively, of the direct-current bus (as shown in Figures 8 and 7). Alternatively, the output terminal of the direct-current voltage-control circuitry is connected to the negative line of the direct-current bus (not depicted in the drawings). A direct-current side of the inverter 205 is connected to the positive line and the negative line of the direct-current bus in the photovoltaic rapid shutdown system.

In a case that the inverter is a grid-connected inverter, the power grid supplies assistant power to the inverter. In a case that the inverter is capable to operate off-grid, the power grid or an energy storage system supplies assistant power to the inverter.

The inverter 205 in coordination with the direct-current voltage-control circuitry enables the inverting system perform the corresponding steps in the method for controlling the photovoltaic rapid shutdown system in the foregoing embodiments. Such steps include determining whether the photovoltaic rapid shutdown system is to enter a safe mode, introducing voltage fluctuations and/or current fluctuations onto the direct-current bus in a case that the photovoltaic rapid shutdown system is not to enter the safe mode, and not introducing the voltage fluctuations and/or the current fluctuations onto the direct-current bus in a case that the photovoltaic rapid shutdown system is to enter the safe mode.

Specific processes and operation principles of the inverting system may refer to the corresponding part in forgoing method embodiments, and are not repeated herein.

The direct-current voltage-control circuitry may be implemented as a direct-current voltage controller 214 independently connected in the direct-current bus (as shown in Figures 8 and 14), or as a starting voltage module 303 in the inverter 205 (as shown in Figures 7 and 15). Hereinafter the above two implementations are described in details.
(1) As shown in Figures 7 and 15, the direct-current voltage-control circuitry is the starting voltage module 303 in the inverter 205. The inverter 205 further includes an internal controller (not depicted), a DC/DC circuit 302, and an inverting circuit 301.

As shown in Figure 7, a positive terminal and a negative terminal of one side of the DC/DC circuit 302 are connected to a positive input terminal and a negative input terminal, respectively, of the starting voltage module 303, and common terminals in the above two connections serve as a positive terminal and a negative terminal, respectively, of the direct-current side of the inverter 205. The other side of the DC/DC circuit 302 is connected to a direct-current side of the inverting circuit 301. An alternating-current side of the inverting circuit 301 serves as an alternating-current side of the inverter 205.

As shown in Figure 15, a positive terminal of one side of the DC/DC circuit 302 is connected to a negative output terminal of the starting voltage module 303, a positive output terminal of the starting voltage module 303 serves as a positive terminal of the direct-current side of the inverter 205, and a negative terminal at such side of the DC/DC circuit 302 serves as a negative terminal of the direct-current side of the inverter 205. The other side of the DC/DC circuit 302 is connected to a direct-current side of the inverting circuit 301. An alternating-current side of the inverting circuit 301 serves as an alternating-current side of the inverter 205.

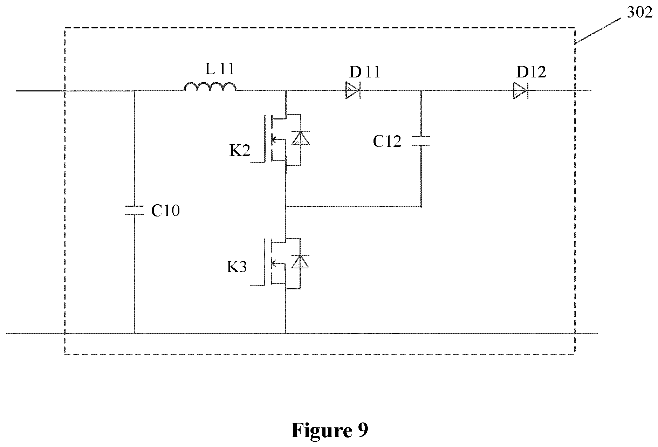

The DC/DC circuit 302 may be implemented as a boost circuit, such as a basic boost circuit (as shown in Figure 7) or a three-level boost circuit (such as a three-level flying-capacitor boost circuit as shown in Figure 9).

As shown in Figure 7, the DC/DC circuit 302 is the basic boost circuit. A terminal of an inductor L1 is connected to a terminal of an input capacitor Cin, and the common terminal between the two is connected to the positive output terminal of the starting voltage module 303. Another terminal of the inductor L1 is connected to a terminal of a switching transistor K1 and a terminal of a diode D1. A cathode of the diode D1 is connected to a positive terminal of the direct-current side of the inverting circuit 301. Another terminal of the switching transistor K1 is connected to another terminal of the input capacitor Cin, and the common terminal between the two is connected to the negative output terminal of the starting voltage module 303 and a negative terminal of the direct-current side of the inverting circuit 301.

Alternatively, as shown in Figure 9 (in which only a structure of the DC/DC circuit 302 is shown), the DC/DC circuit 302 is the three-level flying capacitor boost circuit. A terminal of an inductor L11 is connected to a terminal of an input capacitor C10, and the common terminal between the two is connected to the positive output terminal of the starting voltage module 303. Another terminal of the inductor L11 is connected to a terminal of a switching transistor K2 and a terminal of a diode D11. A cathode of the diode D11 is connected to an anode of a diode D12 and a terminal of a flying capacitor C12. A cathode of the diode D12 is connected to the positive terminal of the direct-current side of the inverting circuit 301. Another terminal of the switching transistor K2 is connected to a terminal of a switching transistor K3 and another terminal of the flying capacitor C12. Another terminal of the switching transistor K3 is connected to another terminal of the input capacitor C10, and the common terminal between the two is connected to the negative output terminal of the starting voltage module 303 and the negative terminal of the direct-current side of the inverting circuit 301.

In practice, the starting voltage module 303 is configured to apply multiple levels of direct-current voltages separately on the direct-current bus under control of the inverter 205, or stop applying the multiple levels of direct-current voltages on the direct-current bus under control of the inverter 205. The energy storage system or the power grid supplies power to the starting voltage module 303, that is, an input terminal of the starting voltage module 303 is connected to the power grid or an energy storage battery in the energy storage system.

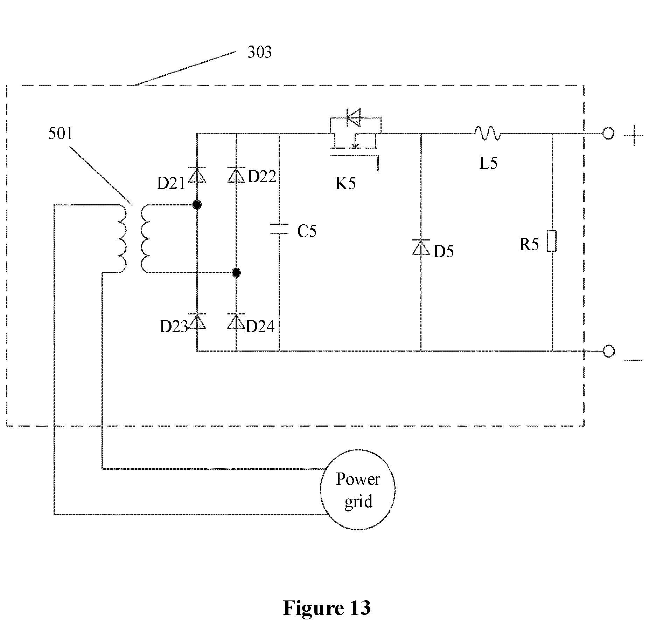

In a case that the power grid supplies power to the starting voltage module 303, the starting voltage module 303 includes a transformer 501, a diode rectifier bridge (including a diode D21, a diode D22, a diode D23, and a diode D24 as shown in Figure 13) and a starting DC/DC circuit (including a capacitor C5, a resistor R5, a switching transistor K5 and a diode D5 as shown in Figure 13).

A primary winding of the transformer 501 is connected to the power grid. A secondary winding of the transformer 501 is connected to input terminals of the diode rectifier bridge. A positive output terminal and a negative output terminal of the diode rectifier bridge are connected to a side of the starting DC/DC circuit. The other side of the starting DC/DC circuit serves as the output terminals of the starting voltage module 303.

The transformer 501 is a power-frequency isolation transformer or a high-frequency isolation transformer. The starting DC/DC circuit is a buck circuit, a boost circuit, or a buck-boost circuit.

It is taken as an example that the starting DC/DC circuit is the buck circuit as shown in Figure 13. A terminal of the primary winding of the transformer 501 is connected to a terminal of the power grid, and another terminal of the primary winding of the transformer 501 is connected to another terminal of the power grid. An anode of the diode D21 is connected to a terminal of the secondary winding of the transformer 501 and a cathode of the diode D23. An anode of the diode D22 is connected to another terminal of the secondary winding of the transformer 501 and a cathode of the diode D24. A cathode of the diode D21 is connected to a cathode of the diode D22, a terminal of the capacitor C5, and a terminal of the switching transistor K5. Another terminal of the switching transistor K5 is connected to a cathode of the diode D5 and a terminal of an inductor L5. Another terminal of the inductor L5 is connected to a terminal of the resistor R5, and the common terminal of the two serves as the positive output terminal of the starting voltage module 303. Another terminal of the capacitor C5 is connected to an anode of the diode D23, an anode of the diode D24, an anode of the diode D5 and another terminal of the resistor R5, and the common terminal of the above components serves as the negative output terminal of the starting voltage module 303.

The transformer 501 is a small step-down transformer. For example, the transformer 501 may convert an alternating-current grid voltage of 220V into an alternating-current voltage of 15V, and then the 15V alternating-current voltage is converted into a direct-current voltage via the diode rectifier bridge. Different direct-current voltage levels may be outputted by regulating a duty cycle of the switching transistor K5 in the buck circuit. The duty cycle of the switching transistor K5 is not limited herein and may depend on an actual situation, and all implementations fall within the protection scope of the present disclosure.

The inverter 205 may be configured to vary the alternating-current output power of itself rapidly during at least one cycle of the power grid, so as to introduce current fluctuations having a frequency higher than a preset frequency onto the direct-current bus. Alternatively, the inverter 205 may be configured to vary the alternating-current output power of itself slowly during at least one cycle of the power grid, so as to introduce current fluctuations having a frequency lower than a preset frequency onto the direct-current bus.

(2) The inverter 205 may be difficult to modify due to hardware or software limitations, that is, the inverter 205 may not be capable to introduce the voltage fluctuations and/or the current fluctuations. In such case, the direct-current voltage controller 214 is independently connected in the direct-current bus in order to address the above issue.

As shown in Figures 8 and 14, the direct-current voltage-control circuitry is the direct-current voltage controller 214 independently connected in the direct-current bus. As shown in Figure 8, a positive terminal and a negative terminal of one side of the direct-current voltage controller 214 are connected to the positive line and the negative line, respectively, of the direct-current bus 203. A positive terminal and a negative terminal of the other side of the direct-current voltage controller 214 are connected to the positive terminal and the negative terminal, respectively, of the direct-current side of the inverter 205. The inverter 205 includes an internal controller and an inverting circuit. A direct-current side of the inverting circuit serves as the direct-current side of the inverter 205, and an alternating-current side of the inverting circuit serves as an alternating-current side of the inverter 205. As shown in Figure 14, a positive output terminal of the direct-current voltage controller 214 is connected to a positive line of the direct-current bus 203, and a negative output terminal of the direct-current voltage controller 214 is connected to the positive terminal of the direct-current side of the inverter 205. The negative terminal of the direct-current side of the inverter 205 is connected to the negative line of the direct-current bus. The inverter 205 includes an internal controller and an inverting circuit. A direct-current side of the inverting circuit serves as the direct-current side of the inverter 205, and an alternating-current side of the inverting circuit serves as an alternating-current side of the inverter 205.

The direct-current voltage controller 214 communicates with the inverter 205 via a power line carrier, wireless communication, or wired communication. Other communication means may be additionally or alternatively utilized. A specific communication means is not limited herein and may depends on an actual situation, and all the implementations fall within the protection scope of the present disclosure. The direct-current voltage controller 214 is further configured to implement maximum power point tracking of the direct-current bus 203.

The assistant power to the direct-current voltage controller 214 is supplied by the inverter 205, the power grid, or the energy storage system, which is not limited herein. All implementations fall within the protection scope of the present disclosure.

In the foregoing embodiments, the shutdown device for the photovoltaic module is controlled to be turned on or off only through the direct-current voltage-control circuitry, and it is not necessary to provide a unit for transmitting a starting signal to the shutdown device. In addition, when disposing the unit for transmitting the starting signal in conventical technology, an additional device should be installed in the direct-current bus, and hence a larger direct-current combiner box or an additional direct-current combiner box should be provided for such installation, increasing a construction cost. In the foregoing embodiment, it is not necessary to install an additional device in the direct-current bus, thereby reducing the construction cost.

A photovoltaic rapid shutdown system is further provided according to an embodiment of the present disclosure. Reference is made to Figure 10, in which the photovoltaic rapid shutdown system includes at least one shutdown system and at least one inverting system 204. The shutdown system includes a direct-current bus 203, at least N photovoltaic modules 201, and N shutdown devices 202 for the photovoltaic modules. N is a positive integer.

In the shutdown system, the N shutdown devices 202 are cascaded via output terminals thereof, and are correspondingly connected to output terminals of the photovoltaic modules 201 via input terminals of the N shutdown devices 202. A positive terminal of the cascaded shutdown devices 202 is connected to a positive terminal of a direct-current interface of the inverting system 204 via a positive line of the direct-current bus 203. A negative terminal of the cascaded shutdown devices 202 is connected to a negative line of the direct-current interface of the inverting system 204 via a negative line of the direct-current bus 203. Herein the sign "+" represents a positive terminal and the sign "-" represents a negative terminal.

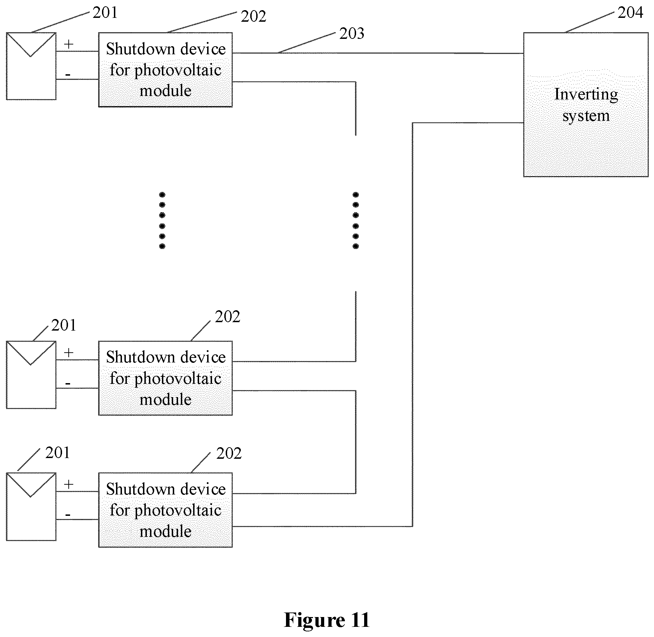

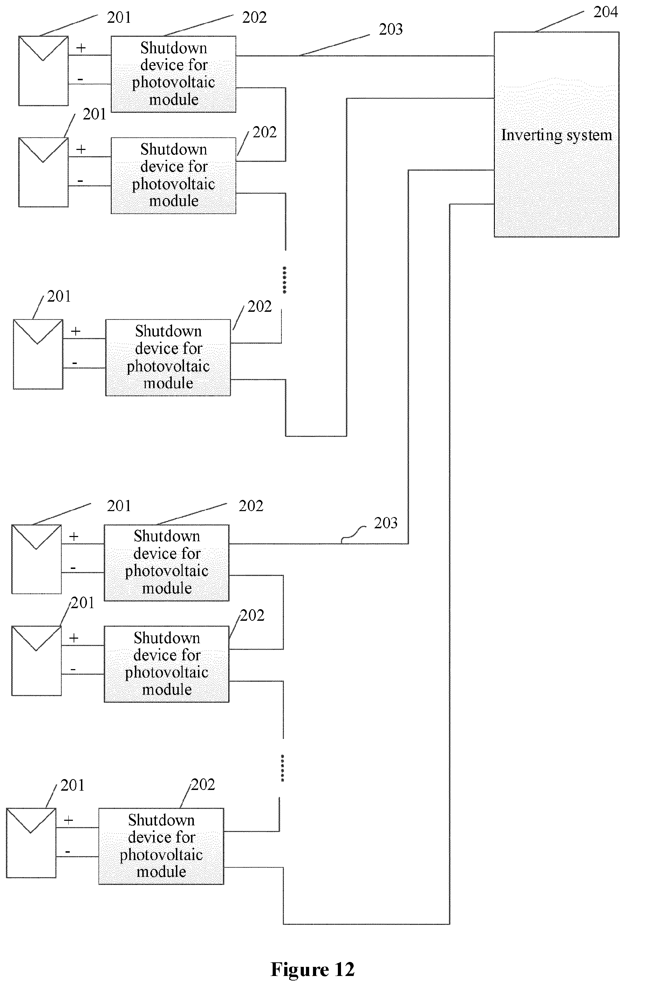

Each shutdown device 202 may be connected to only one photovoltaic module 201 (as shown in Figure 11), or may be connected to multiple photovoltaic modules 201 (for example, two photovoltaic modules 201 as shown in Figure 10). A quantity of the shutdown system may be one (as shown in Figures 11 and 10) or more (for example, two shutdown systems as shown in Figure 12). A quantity of the photovoltaic module 201 connected to each shutdown device 202 may be identical or different among one shutdown system. Being identical or different is not limited herein and may depend on an actual situation, and all implementations fall within the protection scope of the present disclosure.

A structure and an operation principle of the inverting system 204 may refer to the inverting system 204 in the forgoing embodiments, and are not repeated herein.

In the forgoing embodiments, coordinate control of the shutdown device 202 and the inverting system 204 implements startup of the photovoltaic rapid shutdown system(s), and hence the solutions have strong applicability to industry which provides both the shutdown device and the inverter. In addition, hardware costs of the shutdown device 202 and the inverting system 204 in the photovoltaic rapid shutdown system are low. Hence, the photovoltaic rapid shutdown system also has a low hardware cost.

Reference is made to Figure 6, in which the shutdown device 202 includes a switching unit (including Q1 and Q2 as shown in Figure 6), a driving circuit 101, a processor 103, an output stabilizing capacitor Co, a bypass diode Dp, and a parameter collecting unit (including an input voltage collecting unit 100, an output voltage collecting unit 102, and a current collecting unit 104 as shown in Figure 6).

The switching unit is connected in a negative branch of the shutdown device 202 (where such case is not depicted in the drawings). Alternatively, the switching unit is connected in a positive branch of the shutdown device 202 (as shown in Figure 6). In such case, an input terminal of the switching module Q1 serves as an input terminal of the switching unit, and is connected to a positive input terminal Uin+ of the shutdown device 202. An output terminal of the switching module Q1 is connected to an input terminal of the switching module Q2. An output terminal of the switching module Q2 serves as an output terminal of the switching unit. The switching unit is configured to turn on and turn off the shutdown device 202 under control of the processor 103.

Specifically, the switching unit includes at least one switching module (for example, two switching modules as shown in Figure 6). In a case that there is only one switching module, an input terminal of the switching module serves as the input terminal of the switching unit, an output terminal of the switching module serves as the output terminal of the switching unit, and a control terminal of the switching module serves as a control terminal of the switching unit (where such case is not depicted in the drawings). In a case that a quantity of the switching modules is not 1, an input terminal of a branch, which is formed by serial connection of all switching modules, serves as the input terminal of the switching unit, an output terminal of the branch serves as the output terminal of the switching unit, and control terminals of all switching modules serve as control terminals of the switching unit. For example, in a case that there are two switching modules as shown in Figure 6, the input terminal of the switching module Q1 serves as the input terminal of the switching unit, and is connected to the positive input terminal Uin+ of shutdown device 202. The output terminal of the switching module Q1 is connected to the input terminal of the switching module Q2. The output terminal of the switching module Q2 serves as the output terminal of the switching unit. The control terminals of the switching modules Q1 and Q2 serve as the control terminals of the switching unit.

Each switching module includes at least one switching transistor (for example, one switching transistor as shown in Figure 6). In a case that a quantity of the switching transistors is greater than 1, all switching transistors are connected in parallel, in series, or in a hybrid of parallel and series. The switching transistor is a semiconductor switching device, for example, a metal-oxide-semiconductor field-effect transistor (MOSFET), or an insulated gate bipolar transistor (IGBT). The MOSFET is taken as an example in Figure 6. A schematic diagram in which the switching transistor is the IGBT is not depicted herein. All implementations fall within the protection scope of the present disclosure.

The parameter collecting unit is configured to acquire the output parameter of the shutdown device 202 and output the acquired output parameter to the processor 103.

The parameter collecting unit includes an input voltage collecting unit 100, an output voltage collecting unit 102 and a current collecting unit 104.

The input voltage collecting unit 100 is connected between a positive input terminal and a negative input terminal of the shutdown device 202. Specifically, a positive input terminal and a negative input terminal of the input voltage collecting unit 100 are connected to the positive input terminal and the negative input terminal, respectively, of the shutdown device 202. An output terminal of the input voltage collecting unit 100 is connected to the processor 103. The input voltage collecting unit 100 is configured to collect an input voltage of the shutdown device 202 and report the collected input voltage to the processor 103. The negative input terminal of the shutdown device 202 may further be grounded.

The output voltage collecting unit 102 is connected between a positive output terminal and a negative output terminal of the shutdown device 202. Specifically, a positive input terminal and a negative input terminal of the output voltage collecting unit 102 are connected to the positive output terminal and the negative output terminal, respectively, of the shutdown device 202. An output terminal of the output voltage collecting unit 102 is connected to the processor 103. The output voltage collecting unit 102 is configured to collect an output voltage of the shutdown device 202 and report the collected output voltage to the processor 103.

The current collecting unit 104 is configured to collect an output current of the shutdown device 202. In a case that the switching unit is on, the bypass diode Dp is cut off, and a current acquired by the current collecting unit 104 is the output current of the photovoltaic module. In a case that the switching unit is off, the current acquired by the current collecting unit 104 is a current following through the bypass diode Dp.

Generally, the current collecting unit 104 has small impedance, and thus may be connected in various manners. Hereinafter illustrate are four manners of connecting the current collecting unit 104.
(1) Reference is made to Figure 6. The current collecting unit 104 is connected in a negative branch of the shutdown device 202, and between an anode of the bypass diode Dp and a negative output terminal Uout- of the shutdown device 202. Specifically, a terminal of the current collecting unit 104 is connected to the negative output terminal Uout- of the shutdown device 202, and another terminal of the current collecting unit 104 is connected to the anode of the bypass diode Dp and a negative input terminal Uin- of the shutdown device 202.
(2) The current collecting unit 104 is connected in the negative branch of the shutdown device 202, and between the anode of the bypass diode Dp and a negative input terminal of the output voltage collecting unit 102. Specifically, a terminal of the current collecting unit 104 is connected to the anode of the bypass diode Dp and the negative input terminal Uin- of the shutdown device 202, and another terminal of the current collecting unit 104 is connected to the negative input terminal of the output voltage collecting unit 102 and the negative output terminal Uout- of the output end of the shutdown device 202. (Such case is not depicted in the drawings.)
(3) The current collecting unit 104 is connected in the positive branch of the shutdown device 202, and between a cathode of the bypass diode Dp and a positive output terminal Uout+ of the shutdown device 202. Specifically, a terminal of the current collecting unit 104 is connected to the positive output terminal Uout+ of the shutdown device 202, and another terminal of the current collecting unit 104 is connected to the cathode of the bypass diode Dp. (Such case is not depicted in the drawings.)
(4) The current collecting unit 104 is connected in the positive branch of the shutdown device 202, and between the cathode of the bypass diode Dp and the positive input terminal of the output voltage collecting unit 102. Specifically, a terminal of the current collecting unit 104 is connected to the positive output terminal Uout+ of the of the shutdown device 202 and the positive input terminal of the output voltage collecting unit 102, and another end of the current collecting unit 104 is connected to the cathode of the bypass diode Dp. (Such case is not depicted in the drawings.)

The anode of the bypass diode Dp is connected to the negative output terminal Uout - of the shutdown device 202, and the cathode of the bypass diode Dp is connected to the positive output terminal Uout+ of the shutdown device 202. The bypass diode Dp is configured to implement a bypass of the shutdown device 202 when the shutdown device 202 is off.

Two terminals of the output stabilizing capacitor Co are connected to the positive output terminal and the negative output terminal of the shutdown device 202. As shown in Figure 6, a terminal of the output stabilizing capacitor Co is connected to the positive output terminal Uout+ of the shutdown device 202, the cathode of the bypass diode Dp, the positive input terminal of the output voltage collecting unit 102, and the output terminal of the switching unit. Another terminal of the output stabilizing capacitor Co is connected to the negative input terminal of the output voltage collecting unit 102, the anode of the bypass diode Dp, and a terminal of the current collecting unit 104. The output stabilizing capacitor Co is configured to stabilize the output voltage of the shutdown device 202.

An output terminal of the processor 103 is connected to a control terminal of the switching unit via the driving circuit 101. The processor 103, in coordination with the parameter collecting unit, the driving circuit 101, and the switching unit, is configured to enable the shutdown device 202 to perform the corresponding steps in the method for controlling the photovoltaic rapid shutdown system in the foregoing embodiments. The steps include determining according to an output parameter of the shutdown device whether a voltage and/or a current on the direct-current bus connected to the shutdown device meets a preset condition, controlling the shutdown device to be turned on or maintaining the shutdown device being on in a case that the voltage and/or the current on the direct-current bus connected to the shutdown device meets the preset condition, and controlling the shutdown device to be turned off or maintaining the shutdown device being off in a case that the voltage and/or the current on the direct-current bus connected to the shutdown device does not meet the preset condition.

Specific process and operation principles of the shutdown device 202 of the above steps may refer to the corresponding part in the foregoing method embodiments, and are not repeated herein.

In the foregoing embodiments, the shutdown device 202 can turn on and turn off itself based on merely the output parameter collected by the parameter collecting unit in the shutdown device 202, and it is not necessary to utilize communication signals or provide an additional signal receiving module for receiving on/off communication signals outputted by the inverting system. Thereby, a hardware cost of the shutdown device 202 is reduced.

The embodiments of the present disclosure are described in a progressive manner, and each embodiment places emphasis on the difference from other embodiments. Therefore, one embodiment can refer to other embodiments for the same or similar parts. Since the systems disclosed in the embodiments corresponds to the methods disclosed in the embodiments, the description of the systems is simple, and reference may be made to the relevant part of the methods. The systems described in the foregoing embodiments are only schematic. A unit described as separated components may or may not be physically separated, and components depicted as units may or may not be physical, that is, the components may be located in one place or may be distributed among multiple network units. Some or all modules herein may be selected based on an actual requirement to implement an objective of the solution in the embodiments. Those skilled in the art can understand and implement the modules without any creative effort.

As further be appreciated by those skilled in the art, the units and algorithmic steps in the examples described according to the embodiments disclosed herein can be implemented in forms of electronic hardware, computer software or the combination of the both. To illustrate the interchangeability of the hardware and the software clearly, the components and the steps in the examples are described generally according to functions in the above description. Whether hardware or software is used to implement the functions depends on a specific application and design constraints for the technical solution. For each specific application, different methods may be used by those skilled in the art to implement the described function, and such implementation should not be considered to depart from the scope of this invention.

Therefore, the present invention is not limited to the embodiments described herein but conforms to the scope defined by the appended claims.

## Claims

1. A method for controlling a photovoltaic rapid shutdown system, comprising:
determining (S101), by an inverting system in the photovoltaic rapid shutdown system, whether the photovoltaic rapid shutdown system is to enter a safe mode;
introducing (S102), by the inverting system, one or both of voltage fluctuations and current fluctuations onto a direct-current bus in the photovoltaic rapid shutdown system, in a case that the photovoltaic rapid shutdown system is not to enter the safe mode;
not introducing (S103), by the inverting system, the one or both of the voltage fluctuations and the current fluctuations onto the direct-current bus in the photovoltaic rapid shutdown system, in a case that the photovoltaic rapid shutdown system is to enter the safe mode;
determining (S104), by a shutdown device for a photovoltaic module in the photovoltaic rapid shutdown system according to an output parameter of the shutdown device, whether one or both of a voltage and a current on the direct-current bus connected to the shutdown device meets a preset condition;
controlling (S105), by the shutdown device, the shutdown device to be turned on, or maintaining the shutdown device being on, in a case that the one or both of the voltage and the current on the direct-current bus connected to the shutdown device meets the preset condition; and
controlling (S106), by the shutdown device, the shutdown device to be turned off, or maintaining the shutdown device being off, in a case that the one or both of the voltage and the current on the direct-current bus connected to the shutdown device does not meet the preset condition;
**characterized in that**:
the preset condition comprises that a fluctuation greater than a corresponding threshold occurs within a second preset period, where the second preset period is less than rapid shutdown duration of the photovoltaic rapid shutdown system.

2. The method according to claim 1, wherein:
an interval between adjacent groups of the one or two of the voltage fluctuations and the current fluctuations, which are introduced by the inverting system onto the direct-current bus, is less than the rapid shutdown duration of the photovoltaic rapid shutdown system; and/or
duration of the inverting system not introducing the one or both of the voltage fluctuations and the current fluctuations onto the direct-current bus is greater than or equal to the rapid shutdown duration.

3. The method according to claim 1 or 2, wherein:
the safe mode is each shutdown device limiting power outputted by a corresponding photovoltaic module such that the voltage on the direct-current bus is less than a preset voltage for a first preset period.

4. The method according to any one of claims 1 to 3, wherein before introducing (S102), by the inverting system, the one or both of the voltage fluctuations and the current fluctuations onto the direct-current bus in the photovoltaic rapid shutdown system, the method further comprises:
determining (S201), by the inverting system, whether there is a fault in the photovoltaic rapid shutdown system;
performing the step of introducing (S102), by the inverting system, the one or both of the voltage fluctuations and the current fluctuations onto the direct-current bus, in a case that there is no fault in the photovoltaic rapid shutdown system; and
performing the step of not introducing (S103), by the inverting system, the one or both of the voltage fluctuations and the current fluctuations onto the direct-current bus, in a case that there is the fault in the photovoltaic rapid shutdown system.

5. The method according to claim 1, wherein:
the one or both of the voltage fluctuations and the current fluctuations introduced by the inverting system onto the direct-current bus has a frequency greater than a preset frequency; and
determining (S 104), by the shutdown device according to the output parameter, whether the one or both of the voltage and the current on the direct-current bus connected to the shutdown device meets the preset condition comprises:
extracting, by the shutdown device from the output parameter, an effective value of an alternating-current ripple within the second preset period;
determining, by the shutdown device, whether the effective value is greater than or equal to a preset alternating-current ripple value;
determining that the one or both of the voltage and the current on the direct-current bus connected to the shutdown device meets the preset condition, in a case that the effective value is greater than or equal to the preset alternating-current ripple value; and
determining that the one or both of the voltage and the current on the direct-current bus connected to the shutdown device does not meet the preset condition, in a case that the effective value is less than the preset alternating-current ripple value.

6. The method according to claim 1, wherein:
the one or both of the voltage fluctuations and the current fluctuations introduced by the inverting system onto the direct-current bus has a frequency smaller than a preset frequency; and
determining (S104), by the shutdown device according to the output parameter, whether the one or both of the voltage and the current on the direct-current bus connected to the shutdown device meets the preset condition comprises:
determining, by the shutdown device, whether a difference between an average of the output parameter within a period previous to a moment, at which a fluctuation of the output parameter is detected, and an average of the output parameter within a period subsequent to the moment is greater than a corresponding preset current, wherein the moment is within the second preset period, and the output parameter is stable in the period previous to the moment and the period subsequent to the moment;
determining that the one or both of the voltage and the current on the direct-current bus connected to the shutdown device meets the preset condition, in a case that the difference is greater than the preset current; and
determining that the one or both of the voltage and the current on the direct-current bus connected to the shutdown device does not meet the preset condition, in a case that the difference is less than or equal to the preset current.

7. The method according to claim 1, wherein:
the inverting system introduces the voltage fluctuations onto the direct-current bus, and the output parameter comprises an output voltage; and
determining (S104), by the shutdown device according to the output parameter, whether the one or both of the voltage and the current on the direct-current bus connected to the shutdown device meets the preset condition comprises:
determining, by the shutdown device, whether a difference between the voltage previous to a moment, at which the fluctuation of the voltage is detected, and the voltage subsequent to the moment is greater than a preset voltage, where the moment is within the second preset period;
determining that the voltage on the direct-current bus connected to the shutdown device meets the preset condition, in a case that the difference is greater than the preset voltage; and
determining that the voltage on the direct-current bus connected to the shutdown device does not meet the preset condition, in a case that the difference is less than or equal to the preset voltage.

8. A photovoltaic rapid shutdown system, comprising:
at least one shutdown system, and
at least one inverting system, wherein:
each inverting system comprises direct-current voltage-control circuitry (214) and an inverter (205);
an output terminal of the direct-current voltage-control circuitry (214) is connected to one or both of a positive line and a negative line of a direct-current bus (203);
a direct-current side of the inverter (205) is connected to the positive line and the negative line of the direct-current bus (203) in the photovoltaic rapid shutdown system; and
the inverter (205) in coordination the direct-current voltage-control circuitry (214) is configured to enable the inverting system to:
determine whether the photovoltaic rapid shutdown system is to enter a safe mode;
introduce one or both of voltage fluctuations and current fluctuations onto the direct-current bus (203) in a case that the photovoltaic rapid shutdown system is not to enter the safe mode; and
not introduce the one or both of the voltage fluctuations and the current fluctuations onto the direct-current bus (203) in a case that the photovoltaic rapid shutdown system is to enter the safe mode;
each of the at least one shutdown system comprises a direct-current bus, at least N photovoltaic modules (201), and N shutdown devices (202) for the at least N photovoltaic modules (201), N being a positive integer; and
in each of the at least one shutdown system:
the N shutdown devices (202) are cascaded via output terminals of the N shutdown devices (202) and are correspondingly connected to output terminals of the at least N photovoltaic modules (201) via input terminals of the N shutdown devices (202);
a positive terminal of the cascaded shutdown devices (202) is connected to a positive terminal of a direct-current interface of a corresponding inverting system of the N inverting systems via a positive line of the direct-current bus; and
a negative terminal of the cascaded shutdown devices (202) is connected to a negative terminal of the direct-current interface via a negative line of the direct-current bus;
each of the N shutdown devices (202) comprises a switching unit (Q1, Q2), a driving circuit (101), a processor (103), a parameter collecting unit, a bypass diode (Dp), and an output stabilizing capacitor (Co);
the switching unit (Q1, Q2) is connected in a positive branch or a negative branch of the shutdown device (202), and is configured to turn on and turn off said shutdown device (202) under control of the processor (103);
the parameter collecting unit is configured to collect an output parameter of said shutdown device (202) and report the collected output parameter to the processor (103);
the bypass diode (Dp) is configured to implement a bypass of said shutdown device when said shutdown device (202) is turned off;
the output stabilizing capacitor (Co) is configured to stabilize an output voltage of said shutdown device (202);
an output terminal of the processor (103) is connected to a control terminal of the switching unit (Q1, Q2) via the driving circuit (101); and
the processor (103), in coordination with the parameter collecting unit, the driving circuit (101), the output stabilizing capacitor (Co) and the switching unit (Q1, Q2) is configured to enable said shutdown device (202) to:
determine according to the output parameter of said shutdown device (202) whether one or both of a voltage and a current on the direct-current bus connected to said shutdown device (202) meets a preset condition;
control said shutdown device (202) to be turned on or maintain said shutdown device (202) being on in a case that the one or both of the voltage and the current on the direct-current bus connected to said shutdown device (202) meets the preset condition; and
control said shutdown device (202) to be turned off or maintain the shutdown device (202) being off in a case that the one or both of the voltage and the current on the direct-current bus connected to said shutdown device (202) does not meet the preset condition;
**characterized in that**:
the preset condition comprises that a fluctuation greater than a corresponding threshold occurs within a second preset period, where the second preset period is less than rapid shutdown duration of the photovoltaic rapid shutdown system.

9. The photovoltaic rapid shutdown system according to claim 8, wherein the inverter is configured to:
vary an alternating-current output power of the inverter (205) with a high rate within at least one cycle of a power grid to introduce current fluctuations having a frequency greater than a preset frequency onto the direct-current bus (203); or
vary a direct-current input current of the inverter (205) with a low rate to introduce current fluctuations having a frequency less than the preset frequency onto the direct-current bus (203).

10. The photovoltaic rapid shutdown system according to claim 8, wherein:
the parameter collecting unit comprises an output voltage collecting unit and an output current collecting unit;
the output current collecting unit is configured to collect an output current of said shutdown device; and
the output voltage collecting unit is configured to collect an output voltage of said shutdown device.

11. The photovoltaic rapid shutdown system according to claim 10, wherein the parameter collecting unit further comprises an input voltage collecting unit configured to collect an input voltage of said shutdown device.

12. The photovoltaic rapid shutdown system according to any one of claims 8 to 11, wherein the switching unit comprises at least one switching module;
in a case that a quantity of the at least one switching module is 1, an input terminal of the switching module serves as an input terminal of the switching unit, an output terminal of the switching module serves as an output terminal of the switching unit, and a control terminal of the switching module serves as a control terminal of the switching unit; and
in a case that a quantity of the at least on switching module is not 1, an input terminal of a branch formed by all switching modules which are connected in series serves as the input terminal of the switching unit, an output terminal of the branch serves as the output terminal of the switching unit, and control terminals of all switching modules serve as control terminals of the switching unit.

## Patentansprüche

1. Verfahren zum Steuern eines photovoltaischen Schnellabschaltsystems, umfassend:
Bestimmen (S101) durch ein Wechselrichtersystem im photovoltaischen Schnellabschaltsystem, ob das photovoltaische Schnellabschaltsystem in einen Sicherheitsmodus einzutreten hat;
Einleiten (S102) einer oder beider von Spannungsschwankungen und Stromschwankungen auf einen Gleichstrombus im photovoltaischen Schnellabschaltsystem durch das Wechselrichtersystem, wenn das photovoltaische Schnellabschaltsystem nicht in den Sicherheitsmodus einzutreten hat;
Nicht-Einleiten (S103) der einen oder beider der Spannungsschwankungen und Stromschwankungen durch das Wechselrichtersystem auf den Gleichstrombus im photovoltaischen Schnellabschaltsystem, wenn das photovoltaische Schnellabschaltsystem in den Sicherheitsmodus einzutreten hat;
Bestimmen (S104) durch eine Abschaltvorrichtung für ein Photovoltaikmodul im photovoltaischen Schnellabschaltsystem anhand eines Ausgangsparameters der Abschaltvorrichtung, ob eines oder beide einer Spannung und eines Stroms auf dem mit der Abschaltvorrichtung verbundenen Gleichstrombus eine voreingestellte Bedingung erfüllen;
Steuern (S105) des Einschaltens der Abschaltvorrichtung oder des Eingeschaltenhaltens der Abschaltvorrichtung durch die Abschaltvorrichtung, wenn das eine oder beide der Spannung und des Stroms auf dem mit der Abschaltvorrichtung verbundenen Gleichstrombus die voreingestellte Bedingung erfüllen; und
Steuern (S106) des Ausschaltens der Abschaltvorrichtung oder des Ausgeschaltenhaltens der Abschaltvorrichtung durch die Abschaltvorrichtung, wenn das eine oder beide der Spannung und des Stroms auf dem mit der Abschaltvorrichtung verbundenen Gleichstrombus die voreingestellte Bedingung nicht erfüllen;
**dadurch gekennzeichnet, dass**
die voreingestellte Bedingung umfasst, dass eine Schwankung größer als ein entsprechender Schwellenwert innerhalb einer zweiten voreingestellten Periode auftritt, wobei die zweite voreingestellte Periode kürzer als die Schnellabschaltdauer des photovoltaischen Schnellabschaltsystems ist.

2. Verfahren nach Anspruch 1, wobei:
ein Intervall zwischen benachbarten Gruppen der einen oder beider der Spannungsschwankungen und Stromschwankungen, die durch das Wechselrichtersystem auf den Gleichstrombus eingeleitet werden, kürzer als die Schnellabschaltdauer des photovoltaischen Schnellabschaltsystems ist; und/oder
eine Dauer des Nicht-Einleitens des einen oder beider der Spannungsschwankungen und Stromschwankungen auf den Gleichstrombus durch das Wechselrichtersystem größer oder gleich der Schnellabschaltdauer ist.

3. Verfahren nach Anspruch 1 oder 2, wobei:
der Sicherheitsmodus darin besteht, dass jede Abschaltvorrichtung die von einem entsprechenden Photovoltaikmodul ausgegebene Leistung so begrenzt, dass die Spannung auf dem Gleichstrombus für eine erste voreingestellte Periode unter einer voreingestellten Spannung liegt.

4. Verfahren nach einem der Ansprüche 1 bis 3, wobei das Verfahren vor dem Einleiten (S102) des einen oder beider der Spannungsschwankungen und Stromschwankungen auf den Gleichstrombus im photovoltaischen Schnellabschaltsystem durch das Wechselrichtersystem ferner umfasst:
Bestimmen (S201) durch das Wechselrichtersystem, ob ein Fehler im photovoltaischen Schnellabschaltsystem vorliegt;
Durchführen des Schritts des Einleitens (S102) des einen oder beider der Spannungsschwankungen und Stromschwankungen auf den Gleichstrombus durch das Wechselrichtersystem, wenn kein Fehler im photovoltaischen Schnellabschaltsystem vorliegt; und
Durchführen des Schritts des Nicht-Einleitens (S103) des einen oder beider der Spannungsschwankungen und Stromschwankungen auf den Gleichstrombus durch das Wechselrichtersystem, wenn der Fehler im photovoltaischen Schnellabschaltsystem vorliegt.

5. Verfahren nach Anspruch 1, wobei:
das eine oder beide der Spannungsschwankungen und Stromschwankungen, die durch das Wechselrichtersystem auf den Gleichstrombus eingeleitet werden, eine Frequenz größer als eine voreingestellte Frequenz aufweisen; und
das Bestimmen (S104) durch die Abschaltvorrichtung anhand des Ausgangsparameters, ob das eine oder beide der Spannung und des Stroms auf dem mit der Abschaltvorrichtung verbundenen Gleichstrombus die voreingestellte Bedingung erfüllen, umfasst:
Extrahieren eines Effektivwerts einer Wechselstromrestwelligkeit innerhalb der zweiten voreingestellten Periode aus dem Ausgangsparameter durch die Abschaltvorrichtung;
Bestimmen durch die Abschaltvorrichtung, ob der Effektivwert größer oder gleich einem voreingestellten Wechselstromrestwelligkeitswert ist;
Bestimmen, dass das eine oder beide der Spannung und des Stroms auf dem mit der Abschaltvorrichtung verbundenen Gleichstrombus die voreingestellte Bedingung erfüllen, wenn der Effektivwert größer oder gleich dem voreingestellten Wechselstromrestwelligkeitswert ist; und
Bestimmen, dass das eine oder beide der Spannung und des Stroms auf dem mit der Abschaltvorrichtung verbundenen Gleichstrombus die voreingestellte Bedingung nicht erfüllen, wenn der Effektivwert kleiner als der voreingestellte Wechselstromrestwelligkeitswert ist.

6. Verfahren nach Anspruch 1, wobei:
das eine oder beide der Spannungsschwankungen und Stromschwankungen, die durch das Wechselrichtersystem auf den Gleichstrombus eingeleitet werden, eine Frequenz kleiner als eine voreingestellte Frequenz aufweisen; und
das Bestimmen (S104) durch die Abschaltvorrichtung anhand des Ausgangsparameters, ob das eine oder beide der Spannung und des Stroms auf dem mit der Abschaltvorrichtung verbundenen Gleichstrombus die voreingestellte Bedingung erfüllen, umfasst:
Bestimmen durch die Abschaltvorrichtung, ob eine Differenz zwischen einem Durchschnitt des Ausgangsparameters innerhalb einer Periode vor einem Zeitpunkt, an dem eine Schwankung des Ausgangsparameters erkannt wird, und einem Durchschnitt des Ausgangsparameters innerhalb einer Periode nach dem Zeitpunkt größer als ein entsprechender voreingestellter Strom ist, wobei der Zeitpunkt innerhalb der zweiten voreingestellten Periode liegt und der Ausgangsparameter in der Periode vor dem Zeitpunkt und der Periode nach dem Zeitpunkt stabil ist;
Bestimmen, dass das eine oder beide der Spannung und des Stroms auf dem mit der Abschaltvorrichtung verbundenen Gleichstrombus die voreingestellte Bedingung erfüllen, wenn die Differenz größer als der voreingestellte Strom ist; und
Bestimmen, dass das eine oder beide der Spannung und des Stroms auf dem mit der Abschaltvorrichtung verbundenen Gleichstrombus die voreingestellte Bedingung nicht erfüllen, wenn die Differenz kleiner oder gleich dem voreingestellten Strom ist.

7. Verfahren nach Anspruch 1, wobei:
das Wechselrichtersystem die Spannungsschwankungen auf den Gleichstrombus einleitet und der Ausgangsparameter eine Ausgangsspannung umfasst; und
das Bestimmen (S104) durch die Abschaltvorrichtung anhand des Ausgangsparameters, ob das eine oder beide der Spannung und des Stroms auf dem mit der Abschaltvorrichtung verbundenen Gleichstrombus die voreingestellte Bedingung erfüllen, umfasst:
Bestimmen durch die Abschaltvorrichtung, ob eine Differenz zwischen der Spannung vor einem Zeitpunkt, an dem die Schwankung der Spannung erkannt wird, und der Spannung nach dem Zeitpunkt größer als eine voreingestellte Spannung ist, wobei der Zeitpunkt innerhalb der zweiten voreingestellten Periode liegt;
Bestimmen, dass die Spannung auf dem mit der Abschaltvorrichtung verbundenen Gleichstrombus die voreingestellte Bedingung erfüllt, wenn die Differenz größer als die voreingestellte Spannung ist; und
Bestimmen, dass die Spannung auf dem mit der Abschaltvorrichtung verbundenen Gleichstrombus die voreingestellte Bedingung nicht erfüllt, wenn die Differenz kleiner oder gleich der voreingestellten Spannung ist.

8. Photovoltaisches Schnellabschaltsystems, umfassend:
mindestens ein Abschaltsystem, und
mindestens ein Wechselrichtersystem, wobei:
jedes Wechselrichtersystem eine Gleichspannungsregelschaltung (214) und einen Wechselrichter (205) umfasst;
ein Ausgangsanschluss der Gleichspannungsregelschaltung (214) mit einem oder beiden der positiven Leitung und der negativen Leitung eines Gleichstrombusses (203) verbunden ist;
eine Gleichstromseite des Wechselrichters (205) mit der positiven Leitung und der negativen Leitung des Gleichstrombusses (203) im photovoltaischen Schnellabschaltsystem verbunden ist; und
der Wechselrichter (205) in Koordination mit der Gleichspannungsregelschaltung (214) dazu ausgelegt ist, das Wechselrichtersystem dazu zu befähigen:
Bestimmen, ob das photovoltaische Schnellabschaltsystem in einen Sicherheitsmodus einzutreten hat;
Einleiten eines oder beider von Spannungsschwankungen und Stromschwankungen auf den Gleichstrombus (203), wenn das photovoltaische Schnellabschaltsystem nicht in den Sicherheitsmodus einzutreten hat; und
Nicht-Einleiten des einen oder beider der Spannungsschwankungen und Stromschwankungen auf den Gleichstrombus (203), wenn das photovoltaische Schnellabschaltsystem in den Sicherheitsmodus einzutreten hat;
jedes des mindestens einen Abschaltsystems einen Gleichstrombus, mindestens N Photovoltaikmodule (201) und N Abschaltvorrichtungen (202) für die mindestens N Photovoltaikmodule (201) umfasst, wobei N eine positive ganze Zahl ist; und
in jedem des mindestens einen Abschaltsystems:
die N Abschaltvorrichtungen (202) über Ausgangsanschlüsse der N Abschaltvorrichtungen (202) kaskadiert und entsprechend über Eingangsanschlüsse der N Abschaltvorrichtungen (202) mit Ausgangsanschlüssen der mindestens N Photovoltaikmodule (201) verbunden sind;
ein positiver Anschluss der kaskadierten Abschaltvorrichtungen (202) über eine positive Leitung des Gleichstrombusses mit einem positiven Anschluss einer Gleichstromschnittstelle eines entsprechenden Wechselrichtersystems der N Wechselrichtersysteme verbunden ist; und
ein negativer Anschluss der kaskadierten Abschaltvorrichtungen (202) über eine negative Leitung des Gleichstrombusses mit einem negativen Anschluss der Gleichstromschnittstelle verbunden ist;
jede der N Abschaltvorrichtungen (202) eine Schalteinheit (Q1, Q2), eine Ansteuerschaltung (101), einen Prozessor (103), eine Parametererfassungseinheit, eine Bypass-Diode (Dp) und einen Ausgangsstabilisierungskondensator (Co) umfasst;
die Schalteinheit (Q1, Q2) in einem positiven Zweig oder einem negativen Zweig der Abschaltvorrichtung (202) verbunden und dazu ausgelegt ist, die Abschaltvorrichtung (202) unter Steuerung durhc den Prozessor (103) ein- und auszuschalten;
die Parametererfassungseinheit dazu ausgelegt ist, einen Ausgangsparameter der Abschaltvorrichtung (202) zu erfassen und den erfassten Ausgangsparameter an den Prozessor (103) zu melden;
die Bypass-Diode (Dp) dazu ausgelegt ist, einen Bypass der Abschaltvorrichtung zu implementieren, wenn die Abschaltvorrichtung (202) ausgeschaltet ist;
der Ausgangsstabilisierungskondensator (Co) dazu ausgelegt ist, eine Ausgangsspannung der Abschaltvorrichtung (202) zu stabilisieren;
ein Ausgangsanschluss des Prozessors (103) über die Ansteuerschaltung (101) mit einem Steueranschluss der Schalteinheit (Q1, Q2) verbunden ist; und
der Prozessor (103) in Koordination mit der Parametererfassungseinheit, der Ansteuerschaltung (101), dem Ausgangsstabilisierungskondensator (Co) und der Schalteinheit (Q1, Q2) dazu ausgelegt ist, die Abschaltvorrichtung (202) dazu zu befähigen:
Bestimmen anhand des Ausgangsparameters der Abschaltvorrichtung (202), ob eines oder beide einer Spannung und einer Stroms auf dem mit der Abschaltvorrichtung (202) verbundenen Gleichstrombus eine voreingestellte Bedingung erfüllen;
Steuern des Einschaltens der Abschaltvorrichtung (202) oder des Eingeschaltenhaltens der Abschaltvorrichtung (202), wenn das eine oder beide der Spannung und des Stroms auf dem mit der Abschaltvorrichtung (202) verbundenen Gleichstrombus die voreingestellte Bedingung erfüllen; und
Steuern des Ausschaltens der Abschaltvorrichtung (202) oder des Ausgeschaltenhaltens der Abschaltvorrichtung (202), wenn das eine oder beide der Spannung und des Stroms auf dem mit der Abschaltvorrichtung (202) verbundenen Gleichstrombus die voreingestellte Bedingung nicht erfüllen;
**dadurch gekennzeichnet, dass**
die voreingestellte Bedingung umfasst, dass eine Schwankung größer als ein entsprechender Schwellenwert innerhalb einer zweiten voreingestellten Periode auftritt, wobei die zweite voreingestellte Periode kürzer als die Schnellabschaltdauer des photovoltaischen Schnellabschaltsystems ist.

9. Photovoltaisches Schnellabschaltsystem nach Anspruch 8, wobei der Wechselrichter dazu ausgelegt ist:
Variieren einer Wechselstromausgangsleistung des Wechselrichters (205) mit einer hohen Rate innerhalb mindestens eines Zyklus eines Stromnetzes, um Stromschwankungen mit einer Frequenz größer als eine voreingestellte Frequenz auf den Gleichstrombus (203) einzuleiten; oder
Variieren eines Gleichstromeingangsstroms des Wechselrichters (205) mit einer niedrigen Rate, um Stromschwankungen mit einer Frequenz kleiner als die voreingestellte Frequenz auf den Gleichstrombus (203) einzuleiten.

10. Photovoltaisches Schnellabschaltsystem nach Anspruch 8, wobei:
die Parametererfassungseinheit eine Ausgangsspannungserfassungseinheit und eine Ausgangsstromerfassungseinheit umfasst;
die Ausgangsstromerfassungseinheit dazu ausgelegt ist, einen Ausgangsstrom der Abschaltvorrichtung zu erfassen; und
die Ausgangsspannungserfassungseinheit dazu ausgelegt ist, eine Ausgangsspannung der Abschaltvorrichtung zu erfassen.

11. Photovoltaisches Schnellabschaltsystem nach Anspruch 10, wobei die Parametererfassungseinheit ferner eine Eingangsspannungserfassungseinheit umfasst, die dazu ausgelegt ist, eine Eingangsspannung der Abschaltvorrichtung zu erfassen.

12. Photovoltaisches Schnellabschaltsystem nach einem der Ansprüche 8 bis 11, wobei die Schalteinheit mindestens ein Schaltmodul umfasst;
wenn eine Anzahl des mindestens einen Schaltmoduls 1 beträgt, dient ein Eingangsanschluss des Schaltmoduls als Eingangsanschluss der Schalteinheit, dient ein Ausgangsanschluss des Schaltmoduls als Ausgangsanschluss der Schalteinheit und dient ein Steueranschluss des Schaltmoduls als Steueranschluss der Schalteinheit; und
wenn eine Anzahl des mindestens einen Schaltmoduls nicht 1 beträgt, dient ein Eingangsanschluss eines Zweigs, der durch alle in Reihe geschalteten Schaltmodule gebildet wird, als Eingangsanschluss der Schalteinheit, dient ein Ausgangsanschluss des Zweigs als Ausgangsanschluss der Schalteinheit und dienen Steueranschlüsse aller Schaltmodule als Steueranschlüsse der Schalteinheit.

## Revendications

1. Procédé de commande d'un système de mise hors tension rapide photovoltaïque, comprenant les étapes consistant à :
déterminer (S101), au moyen d'un système onduleur dans le système de mise hors tension rapide photovoltaïque, si le système de mise hors tension rapide photovoltaïque doit entrer dans un mode sécurisé ;
introduire (S102), au moyen du système onduleur, au moins un élément parmi des fluctuations de tension et des fluctuations de courant sur un bus à courant continu dans le système de mise hors tension rapide photovoltaïque, dans le cas où le système de mise hors tension rapide photovoltaïque ne doit pas entrer dans le mode sécurisé ;
ne pas introduire (S103), au moyen du système onduleur, ledit au moins un élément parmi les fluctuations de tension et les fluctuations de courant sur le bus à courant continu dans le système de mise hors tension rapide photovoltaïque, dans le cas où le système de mise hors tension rapide photovoltaïque doit entrer dans le mode sécurisé ;
déterminer (S104), au moyen d'un dispositif de mise hors tension pour un module photovoltaïque dans le système de mise hors tension rapide photovoltaïque en fonction d'un paramètre de sortie du dispositif de mise hors tension, si au moins un élément parmi une tension et un courant sur le bus à courant continu connecté au dispositif de mise hors tension remplit une condition prédéfinie ;
commander (S105), au moyen du dispositif de mise hors tension, l'activation du dispositif de mise hors tension, ou le maintien du dispositif de mise hors tension à l'état activé, dans le cas où ledit au moins un élément parmi la tension et le courant sur le bus à courant continu connecté au dispositif de mise hors tension remplit la condition prédéfinie ; et
commander (S106), au moyen du dispositif de mise hors tension, la désactivation du dispositif de mise hors tension, ou le maintien du dispositif de mise hors tension à l'état désactivé, dans le cas où ledit au moins un élément parmi la tension et le courant sur le bus à courant continu connecté au dispositif de mise hors tension ne remplit pas la condition prédéfinie ;
**caractérisé en ce que** :
la condition prédéfinie exige qu'une fluctuation supérieure à un seuil correspondant se produise au cours d'une seconde période prédéfinie, la seconde période prédéfinie étant inférieure à une durée de mise hors tension rapide du système de mise hors tension rapide photovoltaïque.

2. Procédé selon la revendication 1, dans lequel :
un intervalle entre des groupes adjacents dudit au moins un élément parmi les fluctuations de tension et les fluctuations de courant, qui sont introduites au moyen du système onduleur sur le bus à courant continu, est inférieur à la durée de mise hors tension rapide du système de mise hors tension rapide photovoltaïque ; et/ou
une durée pendant laquelle le système onduleur n'introduit pas ledit au moins un élément parmi les fluctuations de tension et les fluctuations de courant sur le bus à courant continu est supérieure ou égale à la durée de mise hors tension rapide.

3. Procédé selon la revendication 1 ou 2, dans lequel :
le mode sécurisé est un mode dans lequel chaque dispositif de mise hors tension limite une puissance délivrée en sortie au moyen d'un module photovoltaïque correspondant de sorte que la tension sur le bus à courant continu soit inférieure à une tension prédéfinie pendant une première période prédéfinie.

4. Procédé selon l'une quelconque des revendications 1 à 3, dans lequel, avant l'introduction (S102), au moyen du système onduleur, dudit au moins un élément parmi les fluctuations de tension et les fluctuations de courant sur le bus à courant continu dans le système de mise hors tension rapide photovoltaïque, le procédé comprend en outre les étapes consistant à :
déterminer (S201), au moyen du système onduleur, s'il y a un défaut dans le système de mise hors tension rapide photovoltaïque ;
exécuter l'étape d'introduction (S102), au moyen du système onduleur, dudit au moins un élément parmi les fluctuations de tension et les fluctuations de courant sur le bus à courant continu, dans le cas où il n'y a aucun défaut dans le système de mise hors tension rapide photovoltaïque ; et
exécuter l'étape de non-introduction (S103), au moyen du système onduleur, dudit au moins un élément parmi les fluctuations de tension et les fluctuations de courant sur le bus à courant continu, dans le cas où le défaut est présent dans le système de mise hors tension rapide photovoltaïque.

5. Procédé selon la revendication 1, dans lequel :
ledit au moins un élément parmi les fluctuations de tension et les fluctuations de courant introduites au moyen du système onduleur sur le bus à courant continu a une fréquence supérieure à une fréquence prédéfinie ; et
l'étape consistant à déterminer (S104), au moyen du dispositif de mise hors tension en fonction du paramètre de sortie, si ledit au moins un élément parmi la tension et le courant sur le bus à courant continu connecté au dispositif de mise hors tension remplit la condition prédéfinie comprend les étapes consistant à :
extraire, au moyen du dispositif de mise hors tension à partir du paramètre de sortie, une valeur efficace d'une ondulation de courant alternatif au cours de la seconde période prédéfinie ;
déterminer, au moyen du dispositif de mise hors tension, si la valeur efficace est supérieure ou égale à une valeur d'ondulation de courant alternatif prédéfinie ;
déterminer que ledit au moins un élément parmi la tension et le courant sur le bus à courant continu connecté au dispositif de mise hors tension remplit la condition prédéfinie, dans le cas où la valeur efficace est supérieure ou égale à la valeur d'ondulation de courant alternatif prédéfinie ; et
déterminer que ledit au moins un élément parmi la tension et le courant sur le bus à courant continu connecté au dispositif de mise hors tension ne remplit pas la condition prédéfinie, dans le cas où la valeur efficace est inférieure à la valeur d'ondulation de courant alternatif prédéfinie.

6. Procédé selon la revendication 1, dans lequel :
ledit au moins un élément parmi les fluctuations de tension et les fluctuations de courant introduites au moyen du système onduleur sur le bus à courant continu a une fréquence inférieure à une fréquence prédéfinie ; et
l'étape consistant à déterminer (S104), au moyen du dispositif de mise hors tension en fonction du paramètre de sortie, si ledit au moins un élément parmi la tension et le courant sur le bus à courant continu connecté au dispositif de mise hors tension remplit la condition prédéfinie comprend les étapes consistant à :
déterminer, au moyen du dispositif de mise hors tension, si une différence entre une moyenne du paramètre de sortie au cours d'une période précédant un instant, auquel une fluctuation du paramètre de sortie est détectée, et une moyenne du paramètre de sortie au cours d'une période suivant ledit instant est supérieure à un courant prédéfini correspondant, dans lequel l'instant se situe dans la seconde période prédéfinie, et le paramètre de sortie est stable dans la période précédant l'instant et la période suivant l'instant ;
déterminer que ledit au moins un élément parmi la tension et le courant sur le bus à courant continu connecté au dispositif de mise hors tension remplit la condition prédéfinie, dans le cas où la différence est supérieure au courant prédéfini ; et
déterminer que ledit au moins un élément parmi la tension et le courant sur le bus à courant continu connecté au dispositif de mise hors tension ne remplit pas la condition prédéfinie, dans le cas où la différence est inférieure ou égale au courant prédéfini.

7. Procédé selon la revendication 1, dans lequel :
le système onduleur introduit les fluctuations de tension sur le bus à courant continu, et le paramètre de sortie comprend une tension de sortie ; et
l'étape consistant à déterminer (S104), au moyen du dispositif de mise hors tension en fonction du paramètre de sortie, si ledit au moins un élément parmi la tension et le courant sur le bus à courant continu connecté au dispositif de mise hors tension remplit la condition prédéfinie comprend les étapes consistant à :
déterminer, au moyen du dispositif de mise hors tension, si une différence entre la tension précédant un instant, auquel la fluctuation de la tension est détectée, et la tension suivant ledit instant est supérieure à une tension prédéfinie, dans lequel l'instant se situe dans la seconde période prédéfinie ;
déterminer que la tension sur le bus à courant continu connecté au dispositif de mise hors tension remplit la condition prédéfinie, dans le cas où la différence est supérieure à la tension prédéfinie ; et
déterminer que la tension sur le bus à courant continu connecté au dispositif de mise hors tension ne remplit pas la condition prédéfinie, dans le cas où la différence est inférieure ou égale à la tension prédéfinie.

8. Système de mise hors tension rapide photovoltaïque, comprenant :
au moins un système de mise hors tension, et
au moins un système onduleur, dans lequel :
chaque système onduleur comprend un circuit de commande de tension continue (214) et un onduleur (205) ;
une borne de sortie du circuit de commande de tension continue (214) est connectée à l'une ou aux deux parmi une ligne positive et une ligne négative d'un bus à courant continu (203) ;
un côté courant continu de l'onduleur (205) est connecté à la ligne positive et à la ligne négative du bus à courant continu (203) dans le système de mise hors tension rapide photovoltaïque ; et
l'onduleur (205), en coordination avec le circuit de commande de tension continue (214), est configuré pour permettre au système onduleur de :
déterminer si le système de mise hors tension rapide photovoltaïque doit entrer dans un mode sécurisé ;
introduire au moins un élément parmi des fluctuations de tension et des fluctuations de courant sur le bus à courant continu (203) dans le cas où le système de mise hors tension rapide photovoltaïque ne doit pas entrer dans le mode sécurisé ; et
ne pas introduire ledit au moins un élément parmi les fluctuations de tension et les fluctuations de courant sur le bus à courant continu (203) dans le cas où le système de mise hors tension rapide photovoltaïque doit entrer dans le mode sécurisé ;
chaque système dudit au moins un système de mise hors tension comprend un bus à courant continu, au moins N modules photovoltaïques (201), et N dispositifs de mise hors tension (202) pour lesdits au moins N modules photovoltaïques (201), N étant un entier positif ; et
dans chaque système dudit au moins un système de mise hors tension :
les N dispositifs de mise hors tension (202) sont montés en cascade par l'intermédiaire de bornes de sortie des N dispositifs de mise hors tension (202) et sont connectés de manière correspondante à des bornes de sortie desdits au moins N modules photovoltaïques (201) par l'intermédiaire de bornes d'entrée des N dispositifs de mise hors tension (202) ;
une borne positive des dispositifs de mise hors tension (202) montés en cascade est connectée à une borne positive d'une interface à courant continu d'un système onduleur correspondant des N systèmes onduleurs par l'intermédiaire d'une ligne positive du bus à courant continu ; et
une borne négative des dispositifs de mise hors tension (202) montés en cascade est connectée à une borne négative de l'interface à courant continu par l'intermédiaire d'une ligne négative du bus à courant continu ;
chacun des N dispositifs de mise hors tension (202) comprend une unité de commutation (Q1, Q2), un circuit d'attaque (101), un processeur (103), une unité de collecte de paramètres, une diode de dérivation (Dp) et un condensateur de stabilisation de sortie (Co) ;
l'unité de commutation (Q1, Q2) est connectée dans une branche positive ou une branche négative du dispositif de mise hors tension (202), et est configurée pour activer et désactiver ledit dispositif de mise hors tension (202) sous la commande du processeur (103) ;
l'unité de collecte de paramètres est configurée pour collecter un paramètre de sortie dudit dispositif de mise hors tension (202) et rapporter le paramètre de sortie collecté au processeur (103) ;
la diode de dérivation (Dp) est configurée pour mettre en œuvre une dérivation dudit dispositif de mise hors tension lorsque ledit dispositif de mise hors tension (202) est désactivé ;
le condensateur de stabilisation de sortie (Co) est configuré pour stabiliser une tension de sortie dudit dispositif de mise hors tension (202) ;
une borne de sortie du processeur (103) est connectée à une borne de commande de l'unité de commutation (Q1, Q2) par l'intermédiaire du circuit d'attaque (101) ; et
le processeur (103), en coordination avec l'unité de collecte de paramètres, le circuit d'attaque (101), le condensateur de stabilisation de sortie (Co) et l'unité de commutation (Q1, Q2), est configuré pour permettre audit dispositif de mise hors tension (202) de :
déterminer en fonction du paramètre de sortie dudit dispositif de mise hors tension (202) si au moins un élément parmi une tension et un courant sur le bus à courant continu connecté audit dispositif de mise hors tension (202) remplit une condition prédéfinie ;
commander l'activation dudit dispositif de mise hors tension (202) ou maintenir ledit dispositif de mise hors tension (202) à l'état activé dans le cas où ledit au moins un élément parmi la tension et le courant sur le bus à courant continu connecté audit dispositif de mise hors tension (202) remplit la condition prédéfinie ; et
commander la désactivation dudit dispositif de mise hors tension (202) ou maintenir le dispositif de mise hors tension (202) à l'état désactivé dans le cas où ledit au moins un élément parmi la tension et le courant sur le bus à courant continu connecté audit dispositif de mise hors tension (202) ne remplit pas la condition prédéfinie ;
**caractérisé en ce que** :
la condition prédéfinie exige qu'une fluctuation supérieure à un seuil correspondant se produise au cours d'une seconde période prédéfinie, la seconde période prédéfinie étant inférieure à une durée de mise hors tension rapide du système de mise hors tension rapide photovoltaïque.

9. Système de mise hors tension rapide photovoltaïque selon la revendication 8, dans lequel l'onduleur est configuré pour :
faire varier une puissance de sortie en courant alternatif de l'onduleur (205) à une vitesse élevée au sein d'au moins un cycle d'un réseau électrique afin d'introduire des fluctuations de courant ayant une fréquence supérieure à une fréquence prédéfinie sur le bus à courant continu (203) ; ou
faire varier un courant d'entrée en courant continu de l'onduleur (205) à une vitesse faible afin d'introduire des fluctuations de courant ayant une fréquence inférieure à la fréquence prédéfinie sur le bus à courant continu (203).

10. Système de mise hors tension rapide photovoltaïque selon la revendication 8, dans lequel :
l'unité de collecte de paramètres comprend une unité de collecte de tension de sortie et une unité de collecte de courant de sortie ;
l'unité de collecte de courant de sortie est configurée pour collecter un courant de sortie dudit dispositif de mise hors tension ; et
l'unité de collecte de tension de sortie est configurée pour collecter une tension de sortie dudit dispositif de mise hors tension.

11. Système de mise hors tension rapide photovoltaïque selon la revendication 10, dans lequel l'unité de collecte de paramètres comprend en outre une unité de collecte de tension d'entrée configurée pour collecter une tension d'entrée dudit dispositif de mise hors tension.

12. Système de mise hors tension rapide photovoltaïque selon l'une quelconque des revendications 8 à 11, dans lequel l'unité de commutation comprend au moins un module de commutation ;
dans le cas où un nombre dudit au moins un module de commutation est égal à 1, une borne d'entrée du module de commutation sert de borne d'entrée de l'unité de commutation, une borne de sortie du module de commutation sert de borne de sortie de l'unité de commutation, et une borne de commande du module de commutation sert de borne de commande de l'unité de commutation ; et
dans le cas où un nombre dudit au moins un module de commutation est différent de 1, une borne d'entrée d'une branche formée par tous les modules de commutation qui sont connectés en série sert de borne d'entrée de l'unité de commutation, une borne de sortie de la branche sert de borne de sortie de l'unité de commutation, et les bornes de commande de tous les modules de commutation servent de bornes de commande de l'unité de commutation.
